# EUROPEAN PATENT SPECIFICATION

(11) **EP 1 901 543 B1**
(45) Date of publication and mention of the grant of the patent: **31.07.2013**
(21) Application number: 07116069.1
(22) Date of filing: 11.09.2007
(51) Int. Cl.: H04N 1/32, H04N 1/00

(54) **Image processing device and image processing method**
Bildverarbeitungsvorrichtung und Bildverarbeitungsverfahren
Procédé et dispositif de traitement d'images

(30) Priority: 12.09.2006 JP 2006247239
(43) Date of publication of application: 19.03.2008
(73) Proprietor: Ricoh Company, Ltd., Tokyo 143-8555 (JP)
(72) Inventor: Sugi, Yoshihiro, Atsugi-shi Kanagawa (JP)
(74) Representative: Schwabe - Sandmair - Marx

(56) References cited:
- EP-A- 0 845 714
- EP-A- 1 398 953
- US-A- 5 392 137
- US-A- 5 461 682
- US-A1- 2006 171 005
- US-A1- 2006 187 246
- US-B1- 6 281 980

## Description

### 1. Field of the Invention

The present invention relates to an image processing device and an image processing method.

### 2. Description of the Related Art

In recent years and continuing, functions of a printer, a copier, a scanner, a facsimile machine, and others are being incorporated into the same housing, and thereby realizing an image forming device known as a multi-function peripheral. Such an image forming device, just like a general purpose computer, has a central processing unit (CPU), and implements the above various functions by software application control.

For example, Japanese Patent Gazette No. 3679349 discloses an image forming device which includes a platform able to be commonly used by different applications, and the applications can be installed by using an API (Application Programming Interface) of the platform. In the above image forming device, since functions commonly used by different applications are provided as the platform, it is possible to prevent duplicate functions from being installed for each function, and improve developing efficiency of the overall application.

However, in the related art, generally, in the platform which has an API able to be commonly used by different applications, if granularity of functions or interfaces provided by the platform is not appropriately designed, the expected application developing efficiency cannot be obtained.

For example, when the granularity is too small, the API has to be called for many times even for an application merely providing simple services, and hence, the source code becomes complicated. On the other hand, when the granularity is too large, in the event that it is desired to install an application for providing services used to modify part of functions given by the interface, it is necessary to modify the platform itself, and this may increase the number of developing steps. Especially, when modules in the platform depend on each other strongly, sometimes, in order to add a new function into the platform, it is necessary to modify existing portions of the platform, and this makes the situation more complicated.

In addition, in the related art, when it is desired to install an application involving a modification to a portion of a service provided by an existing application (for example, the new application involves a modification to an image input procedure of the existing application), it is not allowed to call out the existing application for implementing the other portion of the service. As a result, it is necessary to re-write the source code and install a new application.

EP 1 398 953 A1 describes an apparatus and method for filtering image data. The image processing apparatus includes a filtering processor that includes a filter and switches between a pre-filtering path and a post-filtering path; a data compressor that compresses image data output from the filtering processor; and image data storage that stores the compressed image data; and a data expandor that expands the stored image data. The pre-filtering path includes a first path sending a raw image data to the data compressor via the filter and a second path passing the expanded image data. The post-filtering path includes a third path passing the raw image data to the data compressor and a fourth path sending the expanded image data to the filter.

US-2003/063313 A describes an image forming apparatus. In the image forming apparatus, screen information for displaying a plurality of function options available for a predetermined process is generated. A screen generating program and option information showing the plurality of function options is transmitted in response to an request from an apparatus that is connected through a network and the user uses. The predetermined process is conducted by using a hardware resource when receiving the setting parameter indicating the function option set by the user from the plurality of the function options that the apparatus displays by executing said screen generating program, from the apparatus.

### SUMMARY OF THE INVENTION

The invention is defined by the subject-matter of the independent claims. The dependent claims are directed to advantageous embodiments.

### ADVANTAGES OF THE INVENTION

Advantegeously, it is provided an image processing device and an image processing method able to be easily customized or to have expanded the functions thereof.

Advantageously, there is provided an image processing device, comprising the features of claims 1.

Advantageously, there is provided an image processing method, comprising the features of claim 15.

Advantageously, there is provided a recording medium having the features of claim 16.

These and other features, and advantages of the present invention will become more apparent from the following detailed description of preferred embodiments given with reference to the accompanying drawings.

### BRIEF DESCRIPTION OF THE DRAWINGS

FIG. 1 is a diagram explaining the concept of pipes and filters;
FIG. 2 is a block diagram illustrating an example of a software configuration of an image processing device 100 according to a first embodiment of the present invention;
FIG. 3 is a flowchart illustrating operations of the image processing device 100 of the present embodiment for implementing one function;
FIG. 4 is a table illustrating examples of general combinations of input filters and output filters;
FIG. 5A and FIG. 5B are diagrams explaining an example of a configuration of the pipes and filters, which may be used in an image processing device;
FIG. 6 is a block diagram illustrating an example of an operation panel 60 in the image processing device 100 of the present embodiment;
FIG. 7 is a diagram illustrating an example of control of the pipe 41 in the image processing device 100 of the present embodiment;
FIG. 8 is a diagram illustrating the functions of the pipe 41 according to the present embodiment;
FIG. 9 is a diagram illustrating a process of writing data into the pipe 41;
FIG. 10 is a diagram illustrating a process in which filters at the subsequent stage of the parent pipe 41 and the daughter pipe 41c read data from the parent pipe 41 and the daughter pipe 41c;
FIG. 11 is a diagram illustrating operations of the parent pipe 41 and the daughter pipe 41c after filters read data from the parent pipe 41 and the daughter pipe 41c;
FIG. 12 is a sequence diagram illustrating operations of discarding the real data;
FIG. 13 a table illustrating an example of the acquisition condition table 84 in the present embodiment;
FIG. 14 is a sequence diagram illustrating operations when a starting command is issued for starting processing in the image processing device 100 of the present embodiment;
FIG. 15 is a sequence diagram illustrating operations when a suspending command is issued for suspending processing in the image processing device 100 of the present embodiment;
FIG. 16 is a sequence diagram illustrating operations when a resuming command is issued for resuming processing in the image processing device 100 of the present embodiment;
FIG. 17 is a sequence diagram illustrating operations when a canceling command is issued for canceling processing in the image processing device 100 of the present embodiment;
FIG. 18 is a table illustrating an example of the condition management table 85 in the present embodiment;
FIG. 19A and FIG. 19B are block diagrams illustrating items displayed on the operation panel 60 in the multi-output process in the image processing device 100 of the present embodiment;
FIG. 20 is a diagram illustrating a process in which the parent pipe 41 generates plural daughter filters;
FIG. 21 is a table illustrating an example of a condition management table 85A in the present embodiment; and
FIG. 22 is a block diagram illustrating an image processing device including a recording medium with image processing programs recorded for realizing image processing functions of the present invention.

### DESCRIPTION OF THE PREFERRED EMBODIMENTS

Below, preferred embodiments of the present invention are explained with reference to the accompanying drawings.

### First Embodiment

In the present embodiment, software architecture based on a so-called "pipes and filters" concept is applied to an image processing device, thereby simplifying function customization or expansion of the image processing device. In addition, in the present embodiment, in a multi-output process in which plural output filters are selected relative to one input filter, a primary pipe generates a dependent pipe, the primary pipe and the dependent pipe are combined to be in correspondence with.the plural output filters, and thereby, output processing in the plural output filters is performed in parallel and at the same time.

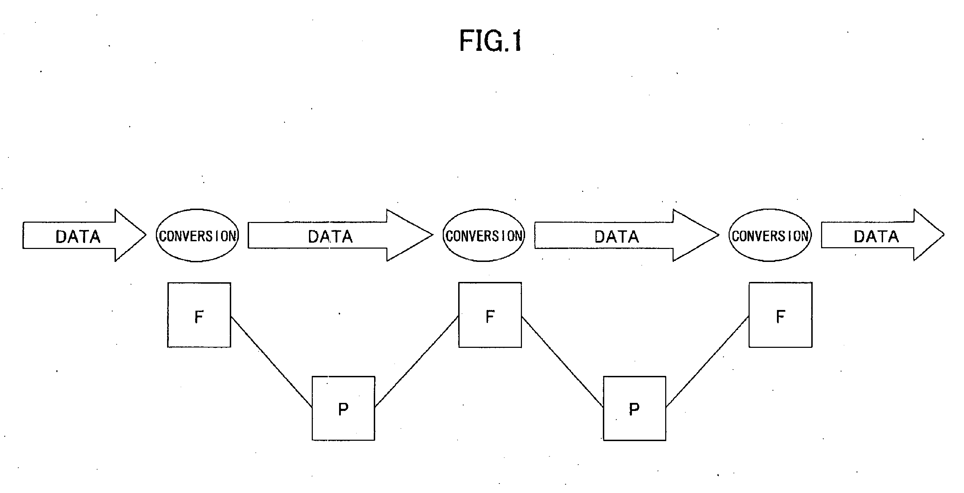

FIG. 1 is a diagram explaining the concept of pipes and filters.

In FIG. 1, a letter "F" indicates a filter, and a letter "P" indicates a pipe.

Here, a "filter" represents a program for performing specified processing on input data, and outputting the processing results; a "pipe" represents means for connecting filters, which temporarily stores the processing results output from the filter coupled to the input side of the pipe, and then transmits the data to the filter coupled to the output side of the pipe. With the pipes and filters concept, processing in filters can be performed continuously with pipes in between.

As shown in FIG. 1, the filters are connected by pipes, the filters convert the input data and output the results, and the pipes transmit data output from a filter to a next filter.

For example, assume that processing executed in filters is for performing conversion on input data. That is, in the image processing device of the present embodiment, each function implemented in the image processing device can be regarded as a series of conversions of document data (input data). The function of the image processing device can be generalized to be composed of document input, document processing, and document output. Hence, "input", "processing", or "output" can be regarded as "conversion", and a software part for implementing a conversion is constructed as a filter.

Particularly, in the present embodiment, a filter for controlling data input is referred to as an "input filter", a filter for controlling data processing is referred to as a "processing filter", and a filter for controlling data output is referred to as an "output filter". It should be noted that different filters are programs independent from each other, that is, there is no dependency relationship (calling relationship) between filters. Thus, it is possible to perform software addition (namely, installation) and software deletion (namely, un-installation) in units of filters.

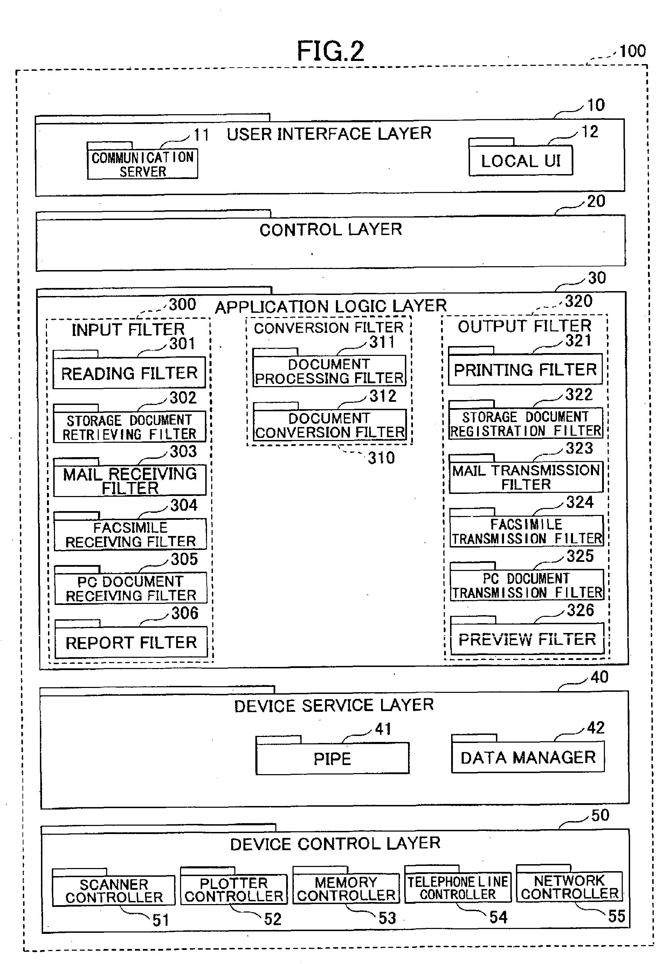

FIG. 2 is a block diagram illustrating an example of a software configuration of an image processing device 100 according to a first embodiment of the present invention.

As described above, the "pipes and filters" concept is applied to the software architecture for implementing various functions in the image processing device 100.

For example, the image processing device 100 is a "multi-function peripheral", which incorporates multiple functions of a printer, a copier, a scanner, a facsimile machine, and others into the same housing.

As shown in FIG. 2, the software architecture for implementing various functions in the image processing device 100 has a hierarchical structure, and includes a user interface layer 10, a control layer 20, an application logic layer 30, a device service layer 40, and a device control layer 50.

Here, the relationship between different layers shown in FIG. 2 is based on an inter-layer calling relationship, in other words, in FIG. 2, basically an upper layer calls out a lower layer.

In the image processing device 100, when a user issues instructions through the user interface layer 10 for executing various functions, the user interface layer 10 calls the control layer 20 to control the application logic layer 30 based on the request for function execution. The application logic layer 30 executes applications for implementing the requested functions based on instructions from the control layer 20. According to results of the execution, the device service layer 40 and the device control layer 50 control hardware resources of the image processing device 100. In this way, the image processing device 100 obtains output results corresponding to the function request received by the user interface layer 10.

Below, the above layers are described specifically.

The user interface layer 10 receives a request for function execution, such as copying, printing, scanning, or facsimile transmission. For example, the user interface layer 10 includes a communication server 11 and a local user interface (UI) 12.

In the user interface layer 10, for example, the communication server 11 receives the request from a not-illustrated client personal computer (PC) through a network, and the local user interface (UI) 12 receives the input request through an operation panel of the image processing device 100. The operation panel is described in detail below.

The request received by the user interface layer 10 is transmitted to the control layer 20.

The control layer 20 controls processing for implementing the requested function. Specifically, the control layer 20 controls coupling filters in the application logic layer 30 by using a pipe 41 in correspondence to the requested function, and controls function execution by using the coupled filters.

In addition, the control layer 20, which corresponds to the control unit recited in claims, controls the pipe 41 based on the function execution request received by the user interface layer 10. The operation of controlling the pipe 41 by the control layer 20 is described in detail below.

In addition, it should be noted that in this specification, "a function of the image processing device 100" means a full-unit service provided by the image processing device 100 to a user, and the term "full-unit" means a period from the time the request is input to the time a final result is obtained. Namely, from the point of view of software, "a function of the image processing device 100" is equivalent to an application which provides a full-unit service.

The application logic layer 30 includes various filters, which are groups of parts for implementing parts of the functions provided by the image processing device 100. Namely, under control of the control layer 20, the application logic layer 30 can implement one function by combining plural filters.

In the present embodiment, the application logic layer 30 includes input filters 300, processing filters 310, and output filters 320. The input filters 300, the processing filters 310, and the output filters 320 operate and are controlled by the control layer 20 based on the same definition. The input filters 300, the processing filters 310, and the output filters 320 are described in detail below.

The device service layer 40 has lower-ranking functions commonly used by the filters in the application logic layer 30. For example, the device service layer 40 includes the pipe 41 and a data manager 42.

The pipe 41 implements the above pipe functions, and transmits output results from one of the filters in the application logic layer 30 to another filter in the application logic layer 30.

The data manager 42 manages various databases in the image processing device 100. For example, the data manager 42 manages a database containing user information registered by users, or a database storing document data and image data processed by the image processing device 100.

The device control layer 50 is composed of programs, known as "drivers", for controlling various devices (hardware). Specifically, in the present embodiment, the device control layer 50 includes a scanner controller 51, a plotter controller 52, a memory controller 53, a telephone line controller 54, and a network controller 55.

The scanner controller 51, the plotter controller 52, the memory controller 53, the telephone line controller 54, and the network controller 55 respectively control a scanner, a plotter, a memory, a telephone line, and a network associated with the image processing device 100.

Although not illustrated, the memory controlled by the memory controller 53 corresponds to the storage unit recited in claims.

Below, the filters in the application logic layer 30 are described in detail.

The input filters 300 of the application logic layer 30 control data input from outside of the image processing device 100. The input filters 300 include a reading filters 301, a stored-document retrieving filter 302, a mail receiving filter 303, a facsimile receiving filter 304, a PC document receiving filter 305, and a report filter 306.

The reading filter 301 controls an image data reading operation of a scanner, and outputs the thus obtained image data.

The stored-document retrieving filter 302 reads out image data (or document data) stored in the data manager 42 or a not illustrated storage device of the image processing device 100 (but not from the outside of the image processing device 100), and outputs the thus obtained image data.

The mail receiving filter 303 receives electronic mail, and outputs data included in the electronic mail.

The facsimile receiving filter 304 receives a facsimile and outputs data included in the facsimile.

The PC document receiving filter 305 receives data to be printed (hereinafter, referred to as "printing data" where appropriate) from a not-illustrated client PC, and outputs the received printing data.

The report filter 306 arranges setting information and history information of the image processing device 100 into table data, and outputs the table data.

In the present embodiment, each processing filter 310 performs processing on data input from a pipe on the input side of the processing filter 310, and outputs processing results to a filter on the output side of the processing filter 310. The processing filters 310 include a document processing filter 311 and a document conversion filter 312.

The document processing filter 311 performs appropriate image conversion processing on input data, for example, image combination, image enlargement, and image reduction of the input data, and outputs the resulting data.

The document conversion filter 312 performs rendering. That is, the document conversion filter 312 converts input PostScript data into bitmap data, and outputs the resulting data.

The output filters 320 of the present embodiment perform data output processing on the input data, and output the results to the outside of the image processing device 100. The output filters 320 include a printing filter 321, a stored-document registration filter 322, a mail transmission filter 323, a facsimile transmission filter 324, a PC document transmission filter 325, and a preview filter 326.

The printing filter 321 outputs input image data to a plotter to print the input image data.

The stored-document registration filter 322 stores the input data in the data manager 42 or a storage device (for example, a hard disk) of the image processing device 100 (but not in devices outside the image processing device 100).

The mail transmission filter 323 transmits electronic mail with the input data attached.

The facsimile transmission filter 324 facsimiles the input data.

The PC document transmission filter 325 transmits the input data to a client PC (not-illustrated).

The preview filter 326 displays the input data on an operation panel of the image processing device 100.

With the application logic layer 30 having the above configurations, the functions of the image processing device 100 are implemented by combining the above filters.

According to the above configurations, various kinds of functions of the image processing device 100 can be implemented by combinations of the filters and pipes. For example, when implementing copy functions, it is sufficient to combine the reading filter 301, the document processing filter 311, and the printing filter 321.

Below, operations of the image processing device 100 are described.

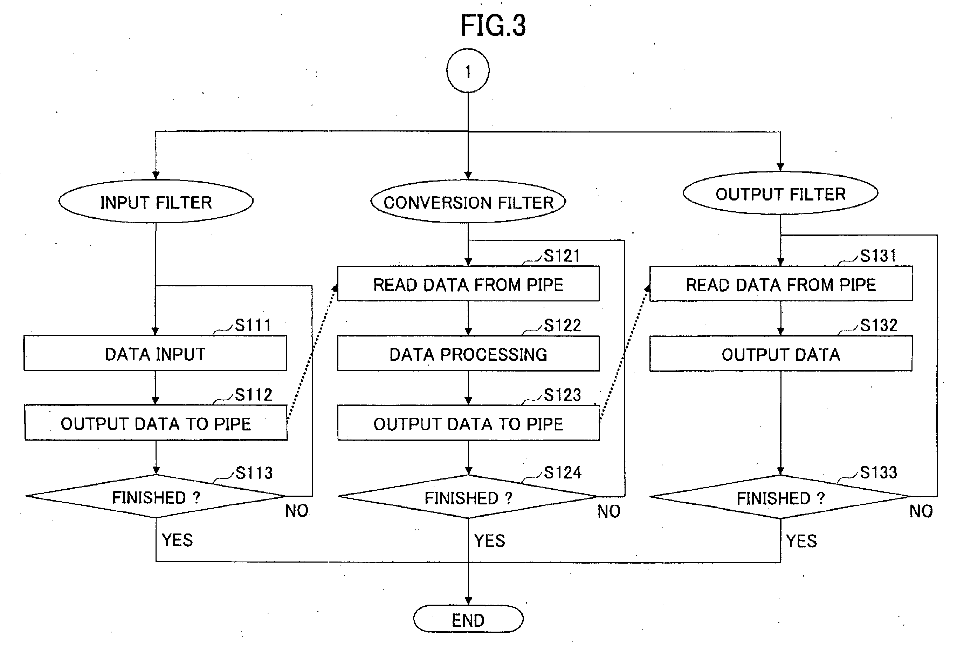

FIG. 3 is a flowchart illustrating operations of the image processing device 100 of the present embodiment for implementing one function.

As shown in FIG. 3, in step S111, the input filter receives data from an input device.

In step S112, the data are output to a pipe connected to the output side of the input filter.

In step S113, when the data are input plural times, for example, when plural sheet-documents are scanned sequentially, the data input operation (to the input filter) and data output operation (to the pipe) are repeated. When processing of a11 of the input data is finished, the operation of the input filter is finished.

The processing filter starts operations when it is detected that data are input to the pipe connected to the input side of the processing filter.

In step S121, the processing filter reads in data from the pipe connected to the input side of the processing filter.

In step S122, the processing filter performs image processing on the data.

In step S123, the processing filter outputs resulting data to the pipe connected to the output side of the processing filter.

In step S124, when all of data input to the pipe connected to the input side of the processing filter have been processed, the operation of the processing filter is finished.

The output filter starts operations when it is detected that data are input to the pipe connected to the input side of the output filter.

In step S131, the output filter reads in data from the pipe connected to the input side of the output filter.

In step S132, the output filter outputs the data by using an output device.

In step S133, when all of data input to the pipe connected to the input side of the output filter have been processed, the operation of the output filter is finished.

In this way, the image processing device 100 implements various functions with the filters as parts, and it is possible to simplify function customization or function expansion in the image processing device 100. In other words, since the filters possess independence, that is, different filters are independent from each other, it is possible to easily develop new functions (applications) by adding new filters or by combining the filters. Therefore, when it is requested to install a new application, if part of processing of the application is not installed, it is sufficient to develop only a filter for executing the part of processing and install the filter. Consequently, in layers lower than the control layer 20 and the application logic layer 30, it is possible to reduce the frequency of modifying the application when installing new applications, and it is possible to provide a stable platform.

Therefore, it is possible to improve efficiency of application development without influence from granularity of functions or interfaces provided by the platform. In addition, even when installing an application which involves partial modification of services provided by existing applications, since it is sufficient to just modify only a part of the filter for providing the service, it is not necessary to create new source codes, hence improving efficiency of application development.

In the image processing device 100, for example, the data input from one input filter 300 may be output by plural output filters in different output methods.

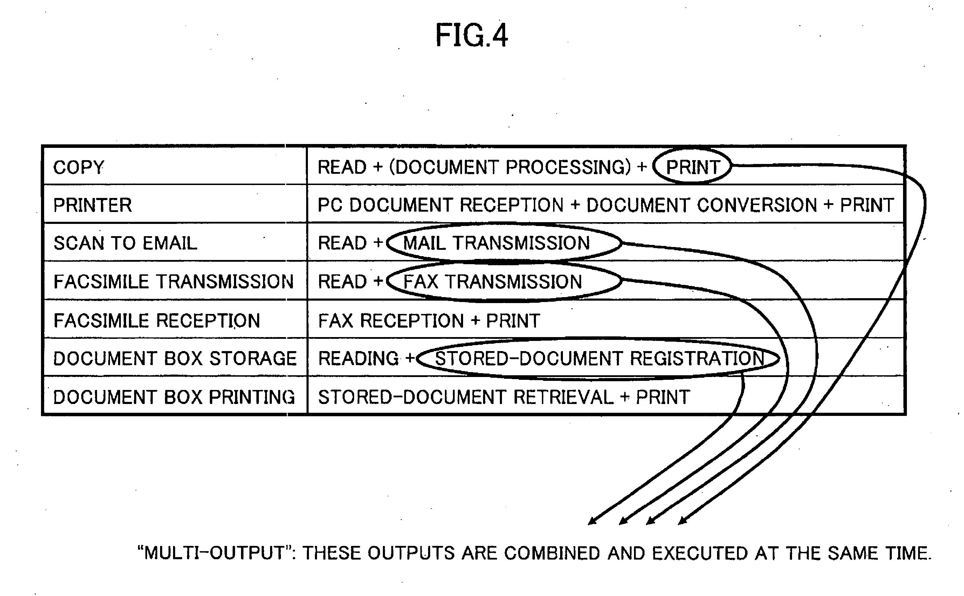

FIG. 4 is a table illustrating examples of general combinations of input filters and output filters.

In the examples shown in FIG. 4, the data read by the reading filter 301 included in the input filters 300 are output as four kinds of output data by four output filters, specifically, the printing filter 321, the stored-document registration filter 322, the mail transmission filter 323, and the facsimile transmission filter 324 included in the output filters 320.

Such a process is referred to as a "multi-output process", in which plural output filters are selected relative to one input filter, namely, data input from one input filter 300 are output from plural output filters.

The multi-output process can be realized relatively easily in an image processing device to which the pipes-and-filters concept is applied, like the image processing device 100 of the present embodiment. However, depending on design of a pipe, for example, the capacity of the memory installed in the image processing device 100 may become insufficient. In addition, it may become difficult to control operations like start, suspend, resume, and cancel processing in each output filter in the image processing device 100. In addition, in case of the multi-output process, it is may become difficult to maintain process-independence in different filters.

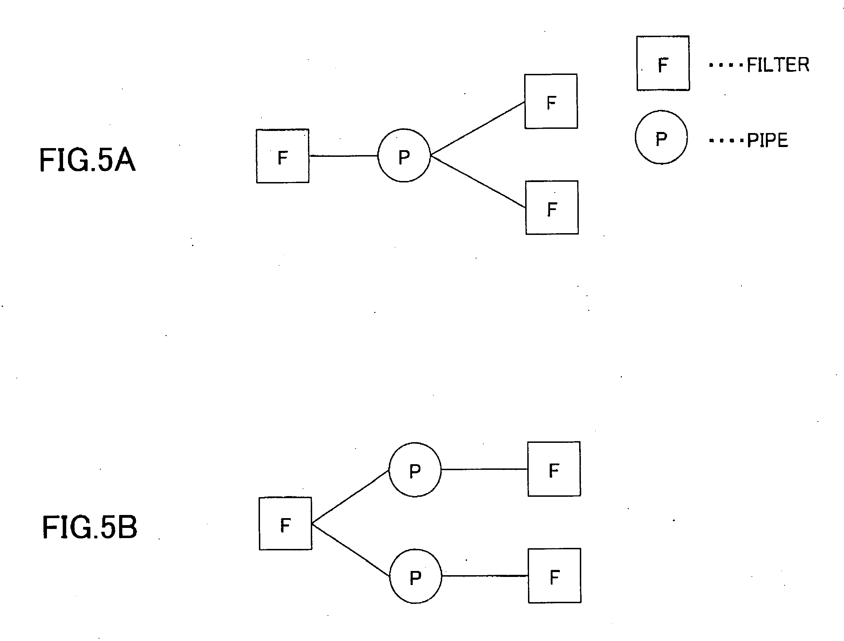

In order to solve this problem, it is proposed to use a pipe-and-filter structure as shown in FIG. 5A and FIG. 5B.

FIG. 5A and FIG. 5B are diagrams explaining an example of a configuration of the pipes and filters, which may be used in an image processing device.

In the example shown in FIG. 5A, plural filters on the output side are coupled to one pipe.

In the example shown in FIG. 5B, there are plural pipes, and a front filter forming an input stage is coupled to plural back filters forming an output stage through different routes.

In the structure shown in FiG. 5A, the pipe needs to determine how the filters forming the subsequent stage of the pipe are operating. For example, it is necessary for the pipe to determine the number of times of reading data from pipes in the filters at the subsequent stage of the pipe. Further, for example, when suspending occurs, it is necessary for the pipe to determine which filter is suspended among the filters at the subsequent stage of the pipe, and to notify the filters at the front stage of the pipe.

In the structure shown in FIG. 5B, the filters at the front stage of the pipe have to write the same data in plural pipes, and the filters at the front stage need to be aware of conditions of the pipes (filters) at the subsequent stage of the pipe.

As described above, in the structures shown in FIG. 5A and FIG. 5B, it is difficult to maintain process-independence between pipes and filters, and between filters and filters, and it is difficult to improve extendability in the filters. Further, originally, a filter is for performing processes to realize certain functions, but in the structures shown in FIG. 5A and FIG. 5B, the filters are required to perform control other than the processes to realize certain functions, and this is not preferable.

To solve this problem, in the image processing device 100 of the present embodiment, in the multi-output process, a parent-daughter relationship is assigned to the pipes.

Specifically, in the present embodiment, in advance, the pipe 41 is assigned to have functions of a parent pipe, and in the multi-output process, the parent pipe is allowed to generate a daughter pipe. The daughter pipe operates in the same way as in the single output process, and the parent pipe determines and manages conditions of both the parent pipe and the daughter pipe.

In the image processing device 100 of the present embodiment, the parent pipe and the daughter pipe are coupled to plural the output filters 320, respectively. It should be noted that here, the "parent pipe" corresponds to the primary pipe in claims of the present application, and the "daughter pipe" correspond to the subsidiary pipe in claims of the present application.

With the structure described above, in the multi-output process, one parent pipe or one daughter pipe is coupled to the front stages of the output filters 320, and one filter is coupled to the front stage and the subsequent stage of the parent pipe or the daughter pipe. Namely, the coupling state of the pipes and filters becomes the same as the single-output process state in which one output filter is selected with respect to an input filter. For this reason, in the image processing device 100 of the present embodiment, even in the multi-output process, the filters may be controlled just like in the single-output process.

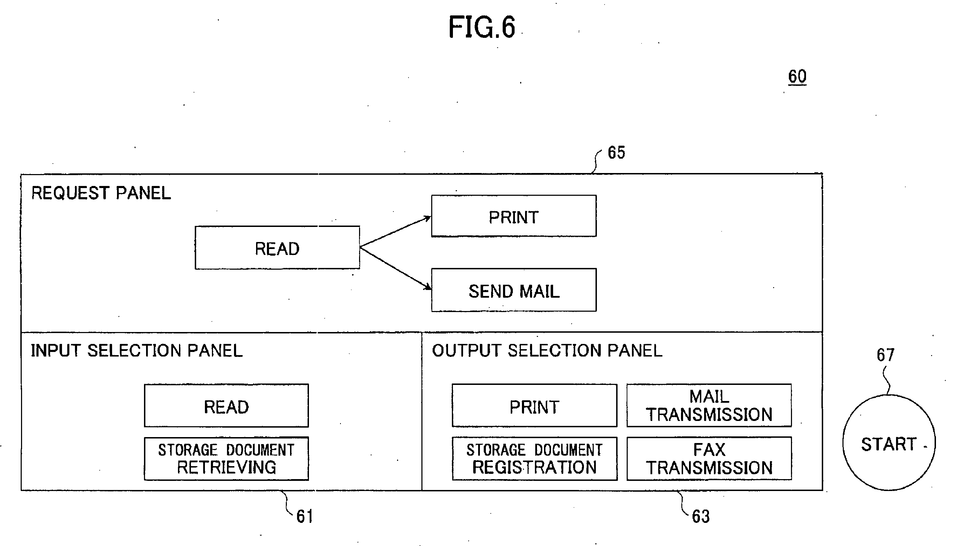

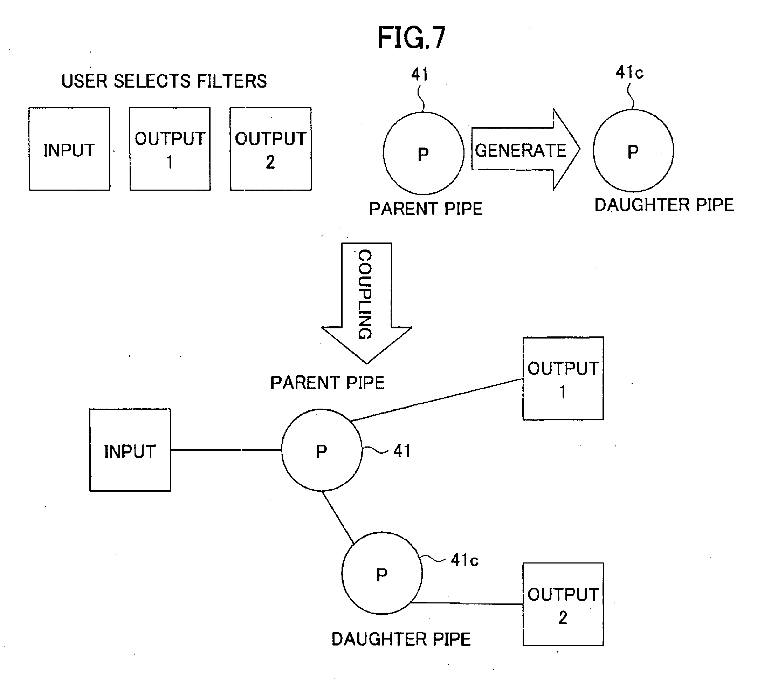

Below, the multi-output process in the image processing device 100 of the present embodiment, to which the pipes and filters concept is applied, is explained with reference to FIG. 6 and FIG. 7.

FIG. 6 is a block diagram illustrating an example of an operation panel 60 in the image processing device 100 of the present embodiment.

In the image processing device 100 of the present embodiment, in the operation panel 60 as shown in FIG. 6, when plural output filters 320 are selected with respect to one input filter 300, the multi-output process is executed.

First, the operation panel 60 is explained with reference to FIG. 6.

With the operation panel 60, a user is able to select filters corresponding to the functions to be implemented in the image processing device 100.

As shown in FIG. 6, the operation panel 60 includes an input selection panel 61, an output selection panel 63, a request panel 65, and a start button 67.

The input selection panel 61 allows the user to select filters included in the input filters 300. The output selection panel 63 allows the user to select filters included in the output filters 320. The request panel 65 displays the filter which is requested to execute selected processing. The start button 67 starts execution of a process for a selected filter.

Note that the operation panel 60 may be implemented to be a touch panel displayed on a display device of the image processing device 100. In addition, the filter selection panel 61, the output selection panel 63, the request panel 65, and the start button 67 may be displayed on the display device. Further, instead of a touch panel, the start button 67 may be implemented to be an operational button near the display. Here, the display device corresponds to the display unit in claims of the present invention.

In the input selection panel 61, when one of the buttons representing the various types of filters included in the input filters 300 is selected, the selected input filter is displayed in the request panel 65.

In FIG. 6, it is illustrated that a button of the reading filter 301, which is included in the input filters 300, is selected.

In the output selection panel 63, when one of the buttons representing the various types of filters included in the output filters 320 is selected, the selected filter is displayed in the request panel 65. In FIG. 6, it is illustrated that buttons of the printing filter 321 and the mail transmission filter 323, which are included in the output filters 320, are selected.

In the image processing device 100, after the input filters 300 and the output filters 320 are selected, the start button 67 is clicked, and the control layer 20 starts processing in the filters. In this step, when plural output filters 320 are selected, the control layer 20 assumes that the multi-output process is requested, and controls the pipe 41 accordingly.

Below, control of the pipe 41 by the control layer 20 is explained with reference to FIG. 7.

FIG. 7 is a diagram illustrating an example of control of the pipe 41 in the image processing device 100 of the present embodiment.

When plural output filters 320 are selected on the operation panel 60, the control layer 20 starts the multi-output process.

Since the pipe 41 is a parent pipe, and has the function of generating a daughter pipe, the control layer 20 controls the pipe 41 to generate a daughter pipe 41c. The functions of the pipe 41, which is a parent pipe, are described below in detail.

When the daughter pipe 41c is generated, based on the selected input filter 300 and the output filter 320, the control layer 20 determines which filters are to be coupled.

Specifically, as shown in FIG. 7, the control layer 20 controls so that an input filter 300 is coupled to the front stage of the parent pipe 41, and output filters 320 are coupled to the subsequent stages of the parent pipe 41 and the daughter pipe 41c.

In this step, appropriate settings may be made in the image processing device 100 in advance so that the control layer 20 is able to select appropriate couplings according to the types of the filter and the pipe. In addition, when a processing filter is between the input filter 300 and the output filter 320, the control layer 20 controls so that one filter is coupled to each of the front stage and the subsequent stage of the processing pipe.

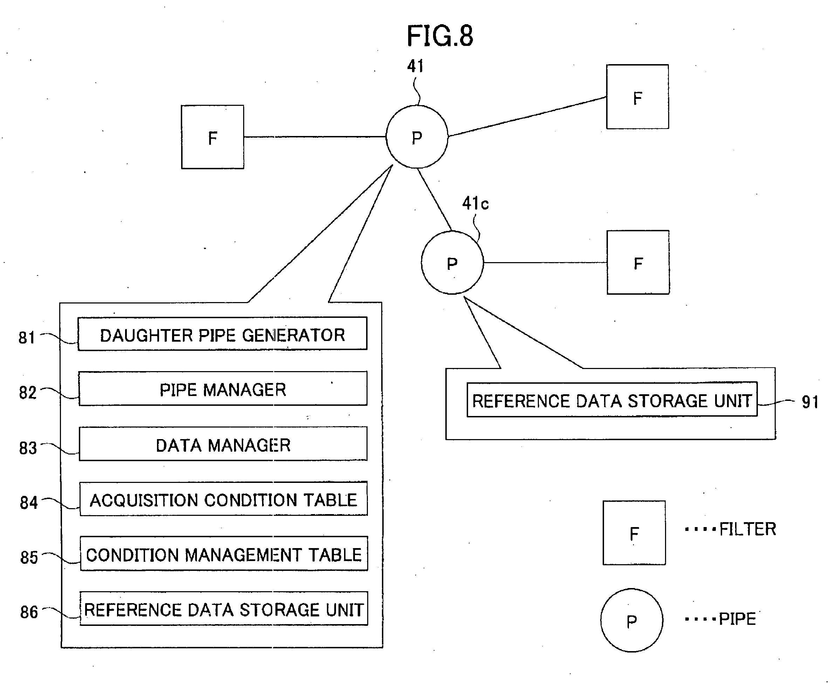

Below, functions of the pipe 41 are explained with reference to FIG. 8.

FIG. 8 is a diagram illustrating the functions of the pipe 41 according to the present embodiment.

For example, the pipe 41 is a memory (including a hard disk drive (HDD)). Functions of the pipe 41 described below can be implemented by programs stored in the memory.

The pipe 41 includes a daughter pipe generator 81, a pipe manager 82, a data manager 83, an acquisition condition table 84, a condition management table 85, and a reference data storage unit 86.

The daughter pipe generator 81 is used for the parent pipe 41 to generate the daughter pipe 41c, and corresponds to the "subsidiary pipe generation unit" in claims of the present application.

The pipe manager 82 is used for the parent pipe 41 to grasp conditions of the parent pipe 41 and the daughter pipe 41c, and manage the conditions of the parent pipe 41 and the daughter pipe 41c. The pipe manager 82 corresponds to the "pipe manager" in claims of the present application.

The data manager 83 manages data output from the filter coupled to the front stage of the parent pipe 41, and corresponds to the "data manager" in claims of the present application.

The acquisition condition table 84 is a table for storing data indicating reference conditions of real data in the parent pipe 41 and the daughter pipe 41c.

The condition management table 85 is a table for storing data indicating conditions of the parent pipe 41 and the daughter pipe 41c.

The reference data storage unit 86 is a table for storing reference data indicating addresses for referring to the real data. The reference data are described in detail below.

The daughter pipe 41c has a reference data storage unit 91 for storing reference data of the daughter pipe 41c, which is the same as the reference data of the parent pipe 41.

Below, data transmission in the multi-output process by the parent pipe 41 and the daughter pipe 41c is explained.

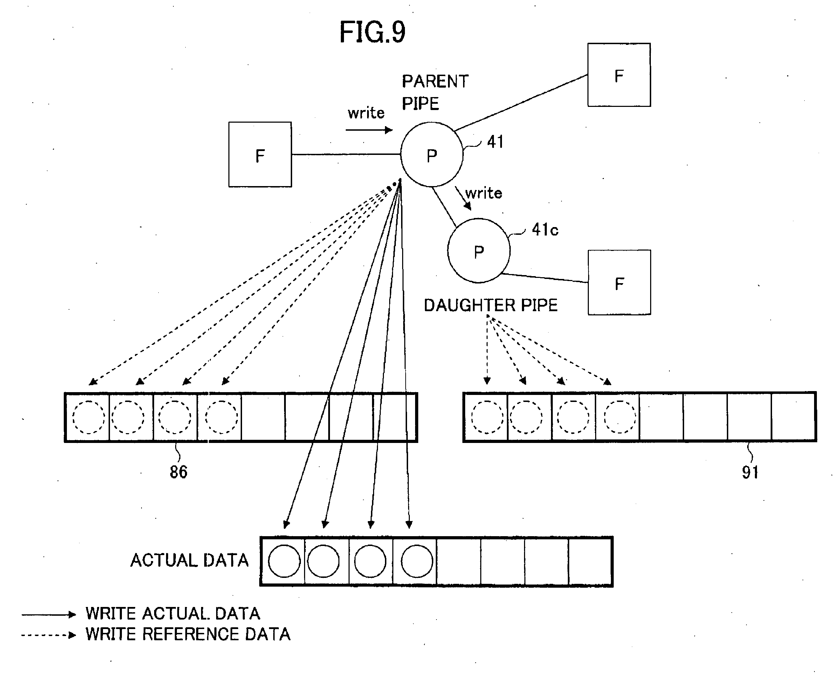

FIG. 9 is a diagram illustrating a process of writing data into the pipe 41.

In the example shown in FIG. 9, there are two output filters selected in the multi-output process, and the control layer 20 controls an output filter 320 that is coupled to the subsequent stage of the parent pipe 41 and the daughter pipe 41c. Here, the filter coupled to the front stage of the parent pipe 41 may be a processing filter, instead of an input filter 300. Further, the filters coupled to the subsequent stages of the parent pipe 41 and the daughter pipe 41c may be processing filters, instead of output filters 320.

Below, operations of the pipe 41 are described.

When data are output from the front-stage filter, the data manager 83 of the pipe 41 writes the output data itself (referred to as "real data", below) into a memory controlled by the memory controller 53. Further, the data manager 83 of the pipe 41 writes reference data for referring to the real data in the memory into the reference data storage unit 86 of the pipe 41. Here, for example, the "reference data" represents information indicating locations of the real data, and with the reference data it is possible to access to the real data in the memory.

When the real data are written in the memory of the pipe 41, and after the reference data are written into the reference data storage unit 86, the pipe 41 writes reference data into the reference data storage unit 91 of the daughter pipe 41c. Here, for example, the reference data written in the reference data storage unit 91 of the daughter pipe 41c are the same as the reference data written in the reference data storage unit 86 of the pipe 41.

As described above, in the present embodiment, data output from the front-stage filter of the pipe 41 are temporarily stored in the memory, which is a storage device outside the pipe 41. Then, the reference data corresponding to the real data are written into both the parent pipe 41 and the daughter pipe 41c. Thereby, the memory can be accessed from both the parent pipe 41 and the daughter pipe 41c. Due to this, even when the number of pipes increases because of the multi-output process in the image processing device 100, the size of the real data, which read data are actually written into the memory, is the same. Therefore, even in the multi-output process, the problem of insufficient memory capacity does not occur. In addition, in the multi-output process, the size of data increases by an amount exactly equaling the reference data written into the pipes, but since the size of the reference data is much smaller than the size of the real data, this increase of data does not cause any problem.

Next, explanations are made of the process in which filters at the subsequent stage of the parent pipe 41 and the daughter pipe 41c read data from the parent pipe 41 and the daughter pipe 41c in the state shown in FIG. 9.

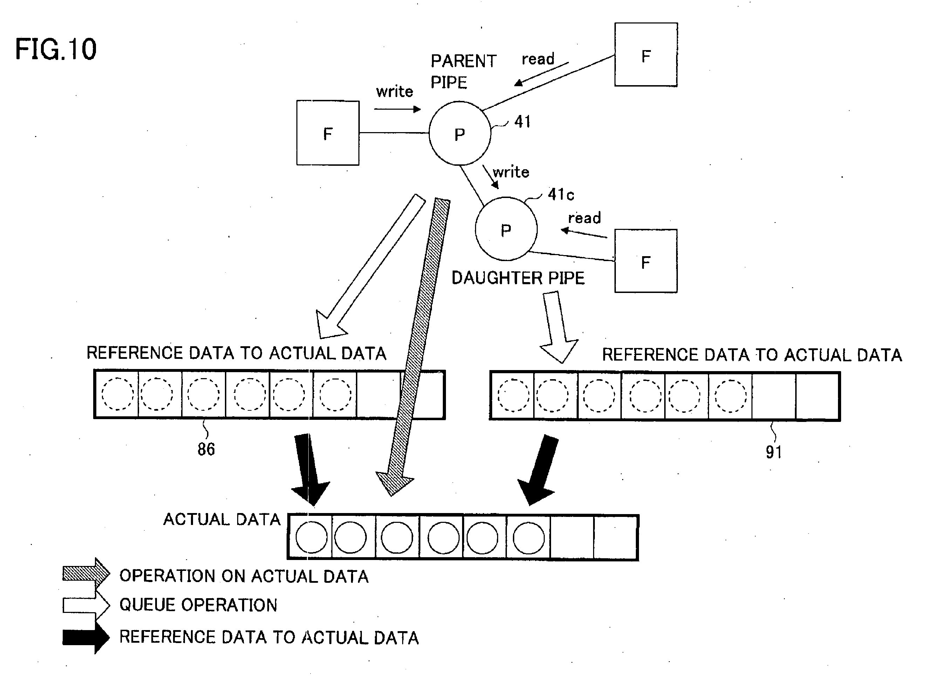

FIG. 10 is a diagram illustrating a process in which filters at the subsequent stage of the parent pipe 41 and the daughter pipe 41c read data from the parent pipe 41 and the daughter pipe 41c.

As shown in FIG. 10, when reading data from the parent pipe 41, when a request for reading data from the subsequent stage filter is received by the parent pipe 41, reference is made to the reference data in the reference data storage unit 86 of the pipe 41. Then, based on the reference data, the pipe 41 obtains the real data written in the memory, and transmits the obtained real data to the subsequent stage filter.

In the daughter pipe 41c, when a request for reading data from the subsequent stage filter is received by the daughter pipe 41c, reference is made to the reference data in the reference data storage unit 91 of the daughter pipe 41c. Then, based on the reference data, the daughter pipe 41c obtains the real data written in the memory, and transmits the obtained real data to the subsequent stage filter. Namely, the pipe 41 and the daughter pipe 41c work in the same way.

Next, explanations are made of operations of the parent pipe 41 and the daughter pipe 41c in the state shown in FIG. 10, after filters read data from the parent pipe 41 and the daughter pipe 41c.

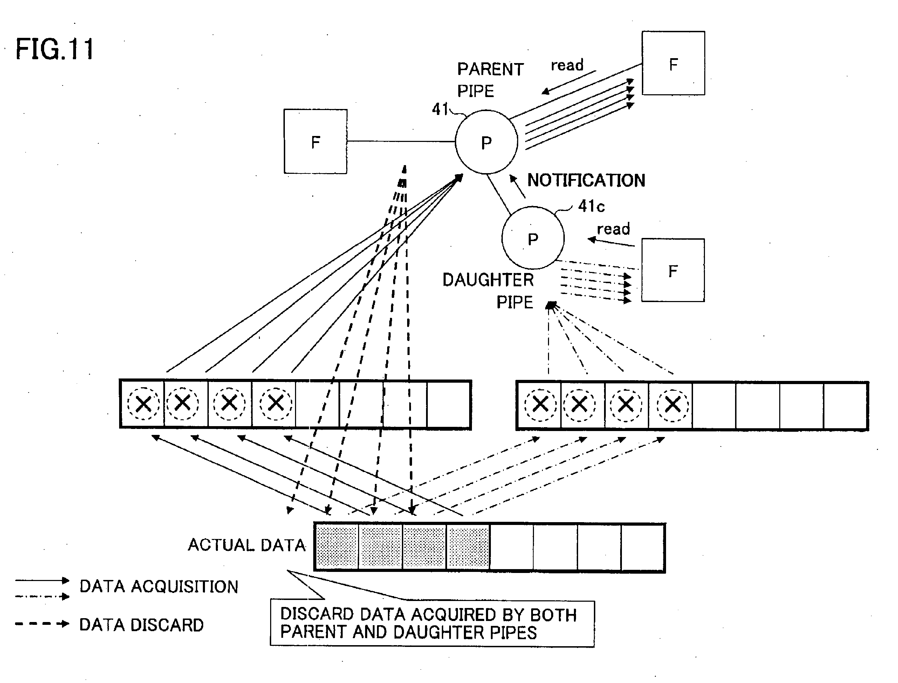

FIG. 11 is a' diagram illustrating operations of the parent pipe 41 and the daughter pipe 41c after filters read data from the parent pipe 41 and the daughter pipe 41c.

As shown in FIG. 11, when the subsequent stage filters read data from the daughter pipe 41c, the daughter pipe 41c notifies the parent pipe 41 that data have been read from the daughter pipe 41c. After receiving the notification, when both the parent pipe 41 and the daughter pipe 41c have accessed the data written in the memory, the data manager 83 discards the real data from the memory.

Below, explanations are made of operations of discarding the real data.

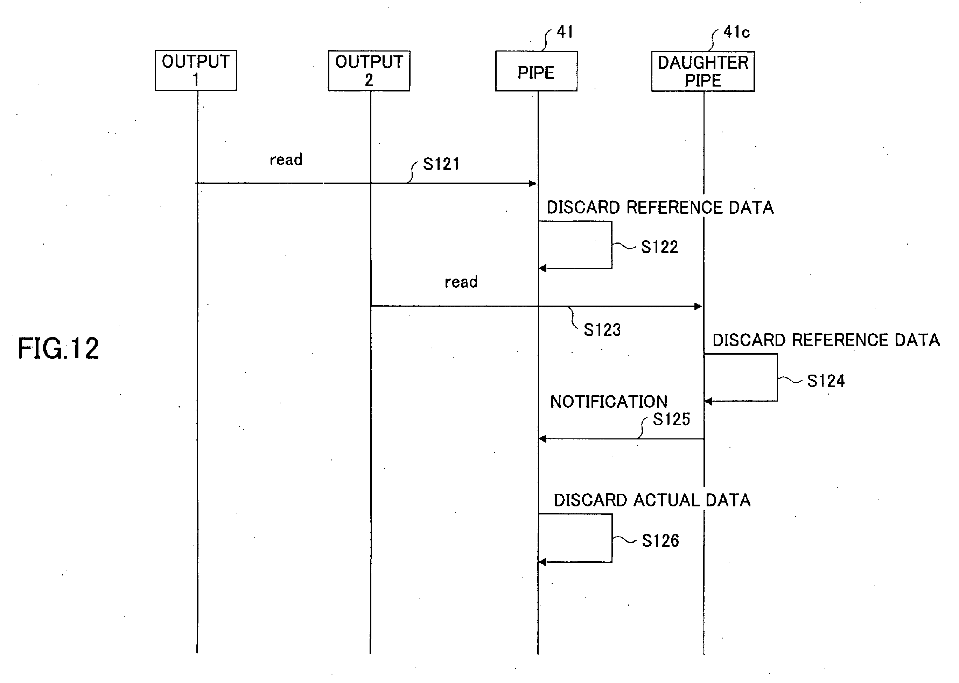

FIG. 12 is a sequence diagram illustrating operations of discarding the real data.

In FIG. 12, the subsequent stage filter of the parent pipe 41 is indicated as "output 1", and the subsequent stage filter of the daughter pipe 41c is indicated as "output 2".

As shown in FIG. 12, in step S121, in the pipe 41, based on a reading request from the output 1, the reference data are referred to, and the corresponding real data are read out.

In step S122, in the pipe 41, the reference data, which correspond to the real data being read out, are discarded.

Next, in step S123, in the daughter pipe 41c, based on a reading request from the output 2, the reference data are referred to, and the corresponding real data are read out.

In step S124, in the daughter pipe 41c, the reference data, which correspond to the real data being read out, are discarded.

In step S125, the daughter pipe 41c notifies the pipe 41 that the real data have been read out.

In step S126, after the pipe 41 confirms that both the parent pipe 41 and the daughter pipe 41c have read the real data based on the reference data, the data manager 83 of the pipe 41 discards the real data from the memory.

That is, in the present embodiment, the parent pipe 41 knows the reference state of the reference data in the parent pipe 41 and the daughter pipe 41c, and the acquisition state of real data. Further, when the reference data are referred to by the parent pipe 41 and the daughter pipe 41c, the parent pipe 41 deems that the real data have been read out by both the parent pipe 41 and the daughter pipe 41c. In addition, when the real data have been obtained by both the parent pipe 41 and the daughter pipe 41c, the data manager 83 of the parent pipe 41 discards the real data from the memory.

In this case, the pipe 41 of the present embodiment uses the acquisition condition table 84 for management, which stores data indicating acquisition conditions of the real data in the parent pipe 41 and the daughter pipe 41c.

Next, the acquisition condition table 84 is explained.

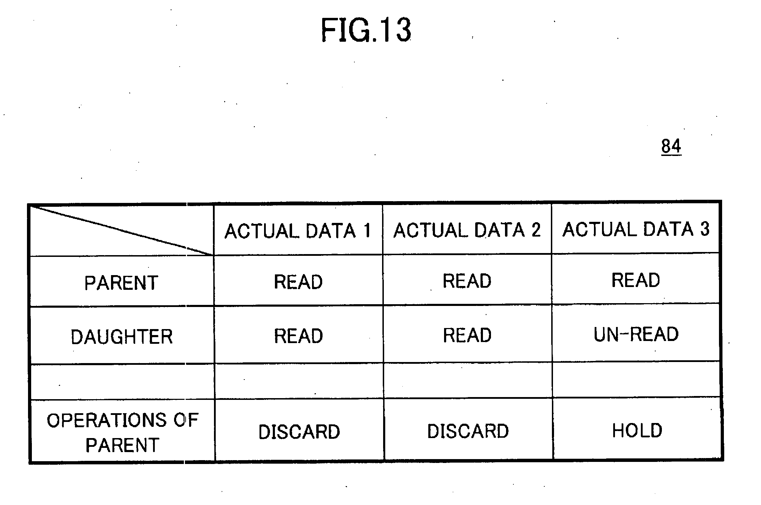

FIG. 13 a table illustrating an example of the acquisition condition table 84 in the present embodiment.

In the parent pipe 41, the data manager 83 discards the real data from the memory based on the acquisition condition table 84.

For example, considering real data 1, assume the real data 1 have been obtained by both the parent pipe 41 and the daughter pipe 41c. In this case, as the acquisition condition of the real data 1, items in the acquisition condition table 84 show that the real data 1 have been obtained by the parent pipe 41 and the daughter pipe 41c. Therefore, the data manager 83 discards the real data 1 from the memory based on these items in the acquisition condition table 84.

Further, considering real data 3, assume the real data 3 have been obtained by the parent pipe 41, but not yet by the daughter pipe 41c. In this case, as the acquisition condition of the real data 3, items in the acquisition condition table 84 show that the real data 3 have been obtained by the parent pipe 41, but have not been obtained by the daughter pipe 41c, yet. Therefore, based on these items in the acquisition condition table 84, the data manager 83 holds the real data 3 in the memory.

In this way, the data manager 83 discards the real data when the real data have been obtained by all pipes having the reference data to the real data. In the present embodiment, these pipes include the parent pipe 41 and the daughter pipe 41c.

Namely, in the image processing device 100 of the present embodiment, the real data that have been obtained already are not stored in the memory for a long time, and this allows the memory to be efficiently used.

In addition, since the parent pipe 41 and the daughter pipe 41c have the reference data storage unit 86 and the reference data storage unit 91, respectively, the filter at the front stage of the pipe 41 can write data into the pipe 41 at any timing, and the filter at the subsequent stage of the pipe 41 and the daughter pipe 41c can read data from the pipe 41 at any timing. Further, the filter at the subsequent stage of the daughter pipe 41c can read data from the daughter pipe 41c at any timing.

Next, descriptions are made of operations when commands are issued for starting, suspending, resuming, and cancelling processing in the image processing device 100 of the present embodiment. It should be noted that in the image processing device 100 of the present embodiment, processes in filters for realizing functions of the image processing device 100 are executed sequentially from the output side.

In the image processing device 100 of the present embodiment, the pipe manager 82 of the parent pipe 41 grasps the conditions of the parent pipe 41 and the daughter pipe 41c, and manages operations of the parent pipe 41 and the daughter pipe 41c in response to conditions of the parent pipe 41 and the daughter pipe 41c.

First, descriptions are made of operations when a starting command is issued for starting processing in the image processing device 100 of the present embodiment.

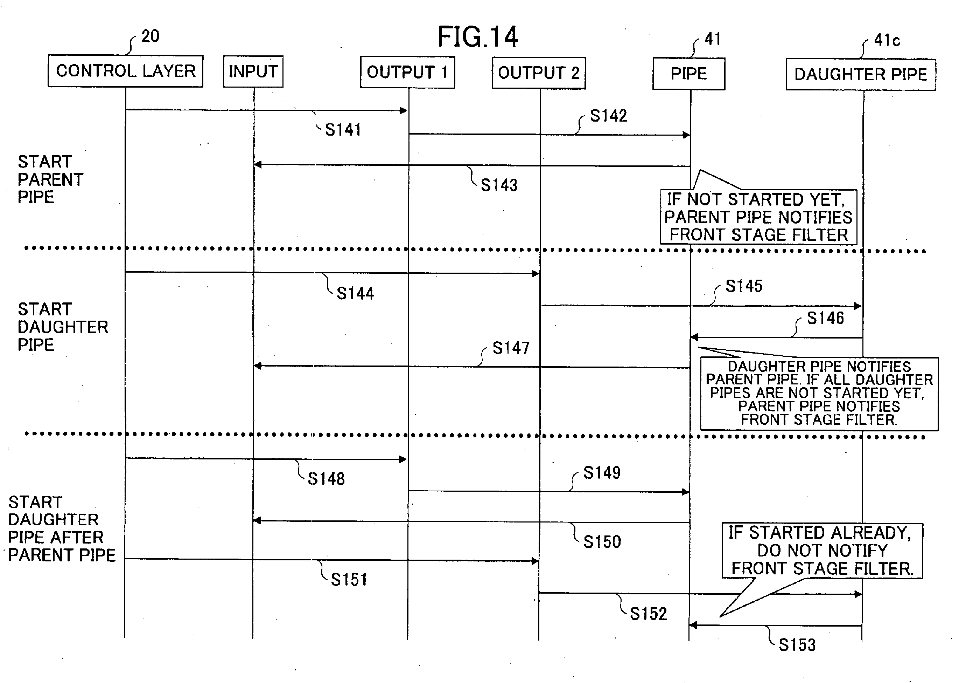

FIG. 14 is a sequence diagram illustrating operations when a starting command is issued for starting processing in the image processing device 100 of the present embodiment.

In FIG. 14, the front stage filter of the pipe 41 is indicated as "input", the subsequent stage filter of the parent pipe 41 is indicated as "output 1", and the subsequent stage filter of the daughter pipe 41c is indicated as "output 2".

In the image processing device 100 of the present embodiment, the pipe 41 is allowed to issue a starting command to the front stage filter for starting processing when it is necessary to start operations in at least one output filter.

First, assume the selected output filter is the output 1, that is, the subsequent stage output filter of the parent pipe 41.

In step S141, in the image processing device 100 of the present embodiment, when starting processing in the output 1 is selected through the operation panel 60, in response, the control layer 20 issues a starting command to the output 1 to start processing.

In step S142, when receiving the starting command, the output 1 transmits the starting command to the pipe 41.

In step S143, when the pipe 41 receives the starting command, the pipe manager 82 of the pipe 41 determines whether at least one of the pipe 41 and the daughter pipe 41c has already received the starting command. Then, when neither the pipe 41 nor the daughter pipe 41c has received the starting command, the pipe manager 82 transmits the starting command to the input of the pipe 41.

It should be noted that the pipe manager 82 grasps the conditions of pipes with reference to the condition management table 85 of the pipe 41. The condition management table 85 is explained below.

Next, assume the selected output filter is the output 2, that is, the subsequent stage output filter of the daughter pipe 41c.

In step S144, when starting processing in the output 2 is selected through the operation panel 60, the control layer 20 issues a starting command to the output 2 to start processing.

In step S145, when receiving the starting command, the output 2 transmits the starting command to the daughter pipe 41c.

In step S146, when the daughter pipe 41c receives the starting command, the daughter pipe 41c notifies the pipe 41 that the starting command is received.

In step S147, when the pipe 41 receives the notification, the pipe manager 82 of the pipe 41 determines whether one of the pipe 41 and the daughter pipe 41c has already received the starting command. Then, when neither the pipe 41 nor the daughter pipe 41c has received the starting command, the pipe manager 82 transmits the starting command to the input of the pipe 41.

Next, consider the case in which the output 2 is selected after the output 1 is selected.

When the output 1 is selected, the procedure from step S148 to step S150 is executed, and the procedure from step S148 to step S150 is the same as the procedure from step S141 to step S143.

When the output 2 is selected, the procedure from step S151 to step S153 is executed, and the procedure from step S151, to step S153 is the same as the procedure from step S144 to step S146.

When the daughter pipe 41c notifies the pipe 41 that the starting command is received in step S153, the pipe manager 82 of the pipe 41 determines whether one of the pipe 41 and the daughter pipe 41c has already received the starting command. If the pipe 41 has already received the starting command, and the starting command has been transmitted to the input of the pipe 41, the pipe manager 82 does not transmit the starting command to the pipe 41.

In doing so, the starting command is not transmitted to the input of the pipe 41 twice.

Next, descriptions are made of operations when a suspending command is issued for suspending processing in the image processing device 100 of the present embodiment.

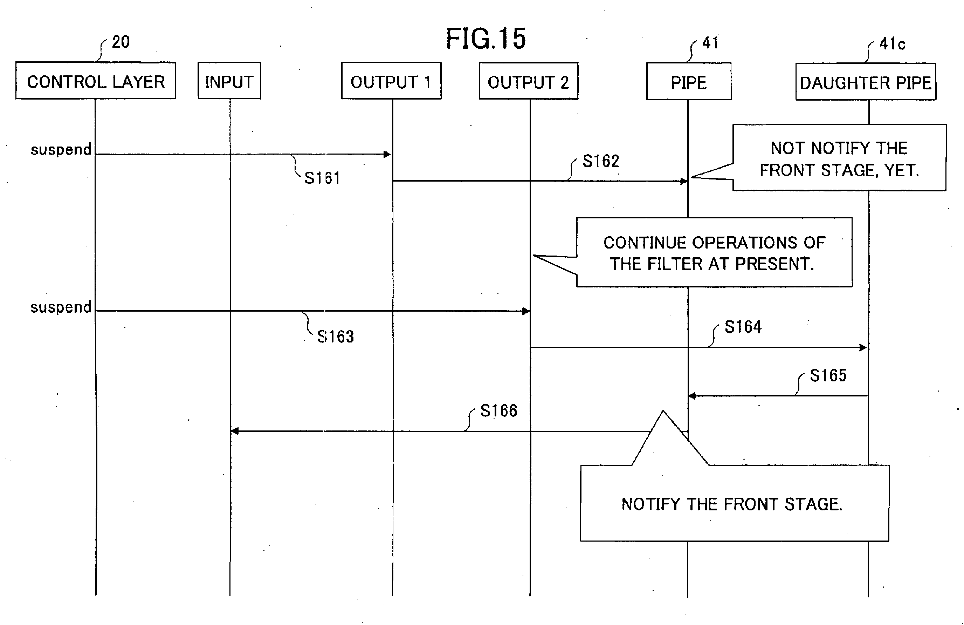

FIG. 15 is a sequence diagram illustrating operations when a suspending command is issued for suspending processing in the image processing device 100 of the present embodiment.

In the image processing device 100 of the present embodiment, if the suspending command is not received by both the pipe 41 and the daughter pipe 41c, the suspending command is not transmitted to the front stage of the pipe 41. Due to this, in the image processing device 100, even when operations of a part of the output filters are suspended, operations of the remaining output filters can be continued.

In FIG. 15, the front stage filter of the pipe 41 is indicated as "input", the subsequent stage filter of the parent pipe 41 is indicated as "output 1", and the subsequent stage filter of the daughter pipe 41c is indicated as "output 2".

Here, assume the suspending command is received first by the output 1 and then by the output 2.

In step S161, when suspending processing in the output 1 is selected through the operation panel 60, in response, the control layer 20 issues a suspending command to the output 1 to suspend processing.

In step S162, when receiving the suspending command, the output 1 transmits the suspending command to the pipe 41.

When the pipe 41 receives the suspending command, the pipe manager 82 of the pipe 41 determines, with reference to the condition management table 85 of the pipe 41, whether both the pipe 41 and the daughter pipe 41c have already received the suspending command. When the pipe manager 82 finds that currently only the pipe 41 has received the suspending command, the pipe manager 82 does not transmit the suspending command to the pipe 41.

Then, in step S163, when suspending processing in the output 2 is selected through the operation panel 60, in response, the control layer 20 issues a suspending command to the output 2 to suspend processing.

In step S164, when receiving the suspending command, the output 2 transmits the suspending command to the daughter pipe 41c.

In step S165, when the daughter pipe 41c receives the suspending command, the daughter pipe 41c notifies the pipe 41 that the suspending command is received.

In step S166, when the pipe 41 receives the notification, the pipe manager 82 of the pipe 41 determines whether both the pipe 41 and the daughter pipe 41c have already received the suspending command. When the pipe manager 82 of the pipe 41 finds, with reference to the condition management table 85 of the pipe 41, that both the pipe 41 and the daughter pipe 41c have already received the suspending command, the pipe manager 82 transmits the suspending command to the pipe 41.

As described above, only when both the pipe 41 and the daughter pipe 41c have already received the suspending command, the pipe manager 82 transmits the suspending command to a front stage filter. Therefore, even when processes in the subsequent stage filters of the daughter pipe 41c are suspended, processes in the subsequent stage filters of the pipes 41 can be continued. Similarly, even when processes in the subsequent stage filters of the pipes 41 are suspended, processes in the subsequent stage filters of the daughter pipe 41c can be continued. Due to this, in the multi-output process in the image processing device 100, it is possible to independently suspend any output processing, and this improves operability of the image processing device 100.

Further, with the above configuration, it is possible to maintain process-independence between pipes and filters, and between filters and filters, and it is possible to improve extendability in the filters.

Next, descriptions are made of operations when a resuming command is issued for resuming processing in the image processing device 100 of the present embodiment.

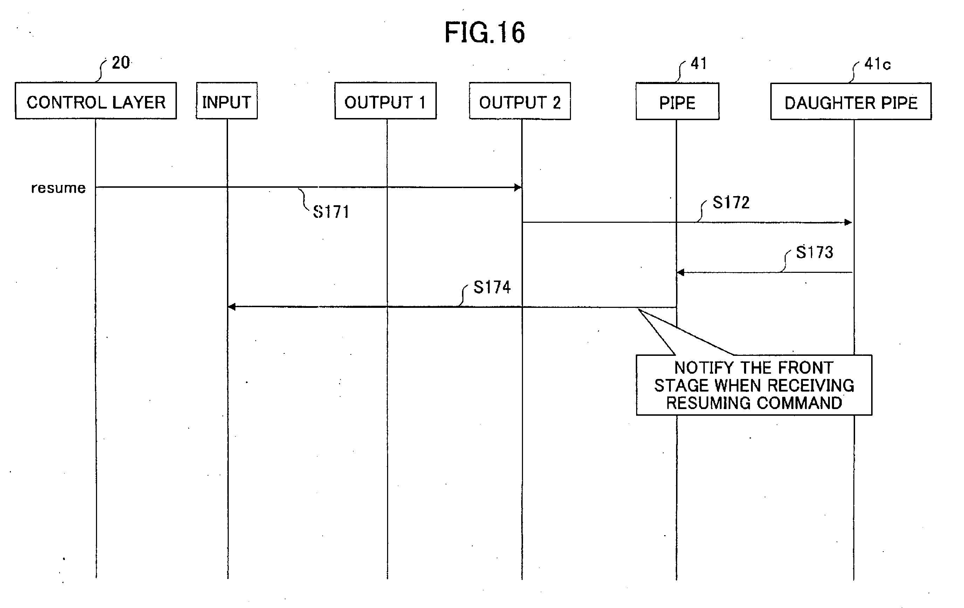

FIG. 16 is a sequence diagram illustrating operations when a resuming command is issued for resuming processing in the image processing device 100 of the present embodiment.

In the image processing device 100 of the present embodiment, similar to the operations when a starting command is issued as shown in FIG. 14, the pipe 41 is allowed to issue a resuming command to the front stage filter for resuming processes when it is necessary to resume operations in at least one output filter.

Here, assume that in the image processing device 100, a resuming command is issued to the output 2 when all processes in the selected output filter are suspended in the multi-output process.

In step S171, when resuming processing in the output 2 is selected through the operation panel 60, in response, the control layer 20 issues a resuming command to the output 2 to resume processing.

In step S172, when receiving the resuming command, the output 2 transmits the resuming command to the daughter pipe 41c.

In step S173, when the daughter pipe 41c receives the resuming command, the daughter pipe 41c notifies the pipe 41 that the resuming command is received.

In the pipe 41, the pipe manager 82 determines, with reference to the condition management table 85 of the pipe 41, whether any one of the pipe 41 and the daughter pipe 41c has already received the resuming command, When the pipe manager 82 finds that currently neither the pipe 41 nor the daughter pipe 41c has received the resuming command, the pipe manager 82 transmits the resuming command to the input of the pipe 41.

In this way, any process which is suspended temporarily can be resumed at any time, and it is possible to maintain process-independence in filters in the image processing device 100.

Next, descriptions are made of operations when a cancelling command is issued for cancelling processing in the image processing device 100 of the present embodiment.

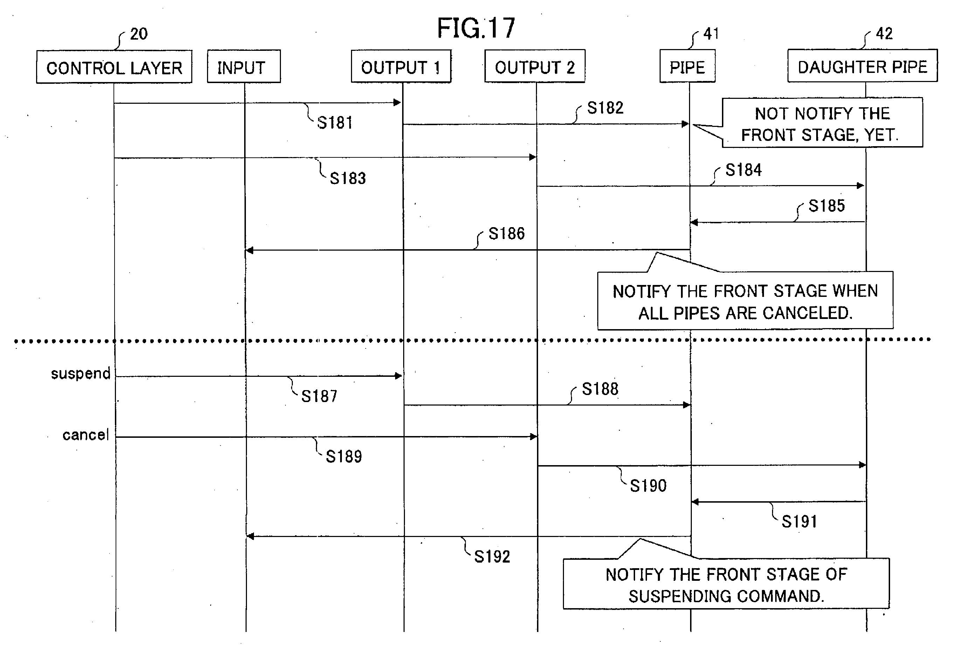

FIG. 17 is a sequence diagram illustrating operations when a canceling command is issued for canceling processing in the image processing device 100 of the present embodiment.

In FIG. 17, the front stage filter of the pipe 41 is indicated as "input", the subsequent stage filter of the parent pipe 41 is indicated as "output 1", and the subsequent stage filter of the daughter pipe 41c is indicated as "output 2".

In the image processing device 100 of the present embodiment, if the canceling commande is not received by both the pipe 41 and the daughter pipe 41c, the canceling command is not transmitted to the front stage of the pipe 41. Due to this, in the image processing device 100, even when operations of a part of the output filters are cancelled, operations of the remaining output filters can be continued.

Further, in the image processing device 100 of the present embodiment, when processing in one output filter is being canceled, and it is requested to cancel processing in another output filter, instead of a cancelling command, a suspending command is transmitted to the front stage filter. In doing so, when a resuming command is issued for the suspended output filter, the processing can be resumed.

First, consider the case in which the cancelling command is received first by the output 1 and then by the output 2.

In step S181, when canceling processing in the output 1 is selected through the operation panel 60, in response, the control layer 20 issues a canceling commande to the output 1 to cancel the processing.

In step S182, when receiving the canceling command, the output 1 transmits the canceling command to the pipe 41.

When the pipe 41 receives the suspending command, the pipe manager 82 of the pipe 41 determines, with reference to the condition management table 85 of the pipe 41, whether both the pipe 41 and the daughter pipe 41c have already received the canceling command. When the pipe manager 82 finds that currently only the pipe 41 received the canceling command, the pipe manager 82 does not transmit the canceling command to the input of the pipe 41.

Then, in step S183, when canceling processing in the output 2 is selected through the operation panel 60, in response, the control layer 20 issues a canceling command to the output 2 to cancel the processing.

In step S184, when receiving the cancelling command, the output 2 transmits the canceling command to the daughter pipe 41c.

In step S185, when the daughter pipe 41c receives the canceling command, the daughter pipe 41c notifies the pipe 41 that the canceling command is received.

In step S186, when the pipe 41 receives the notification, the pipe manager 82 of the pipe 41 determines whether both the pipe 41 and the daughter pipe 41c have already received the canceling command. When the pipe manager 82 of the pipe 41 finds, with reference to the condition management table 85 of the pipe 41, that both the pipe 41 and the daughter pipe 41c have already received the canceling command, the pipe manager 82 transmits the canceling command to the input of the pipe 41.

Next, consider the case in which the output 2 receives a canceling command after the output 1 receives a suspending command.

In step S187, when suspending processing in the output 1 is selected through the operation panel 60, in response, the control layer 20 issues a suspending command to the output 1 to suspend the processing.

In step S188, when receiving the suspending command, the output 1 transmits the suspending command to the pipe 41.

When the pipe 41 receives the suspending command, the pipe manager 82 of the pipe 41 determines, with reference to the condition management table 85 of the pipe 41, whether both the pipe 41 and the daughter pipe 41c have already received the suspending command. When the pipe manager 82 finds that currently only the pipe 41 has received the suspending command, the pipe manager 82 does not transmit the suspending command to the input of the pipe 41.

Then, in step S189, when canceling processing in the output 2 is selected through the operation panel 60, in response, the control layer 20 issues a canceling command to the output 2 to cancel the processing.

In step S190, when receiving the canceling command, the output 2 transmits the canceling command to the daughter pipe 41c.

In step S191, when the daughter pipe 41c receives the canceling command, the daughter pipe 41c notifies the pipe 41 that the canceling command is received.

In step S192, when the pipe 41 receives the notification, the pipe manager 82 of the pipe 41 determines whether both the pipe 41 and the daughter pipe 41c have already received the canceling command or the suspending command. When the pipe manager 82 of the pipe 41 finds, with reference to the condition management table 85 of the pipe 41, that the pipe 41 has received the suspending command, and the daughter pipe 41c received the canceling command, the pipe manager 82 transmits the suspending command to the input of the pipe 41.

In doing so, when a resuming command is issued for resuming processing in the output 1, the processing in the output 1 can be resumed independently.

As described above, in the image processing device 100 of the present embodiment, conditions of the parent pipe 41 and the daughter pipe 41c are determined with reference to the condition management table 85 of the pipe 41. In addition, in the parent pipe 41, the pipe manager 82 manages the parent pipe 41 and the daughter pipe 41c based on results of filters at the subsequent stage of the pipes. For this reason, it is possible to independently start, suspend, resume, or cancel processing in each filter in the image processing device 100.

Next, the condition management table 85 is explained.

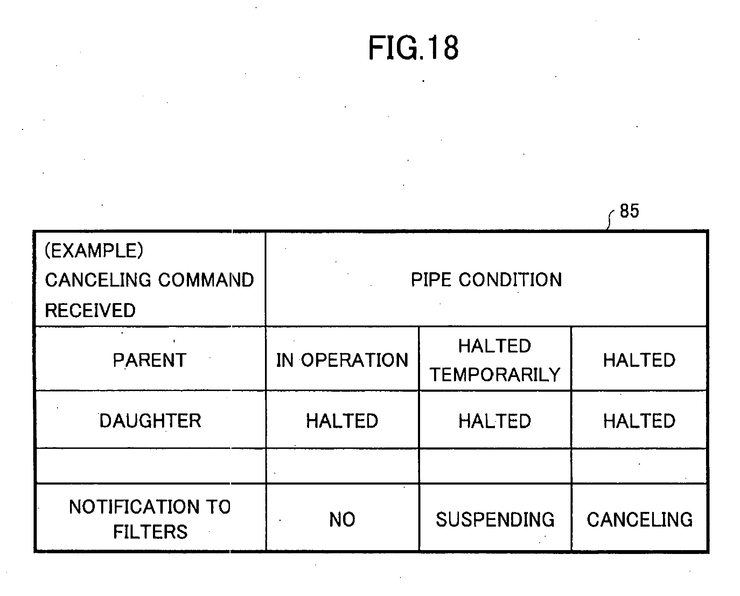

FIG. 18 is a table illustrating an example of the condition management table 85 in the present embodiment.

The condition management table 85 in FIG. 18 shows conditions of the parent pipe 41 and the daughter pipe 41c when the canceling command is transmitted to the pipe 41, and notifications to filters based on combinations of the conditions of the pipes.

For example, according to the condition management table 85 as shown in FIG. 18, when the parent pipe 41 is in operation and the daughter pipe 41c is halted, a notification is not sent to the front stage filter. In addition, according to the condition management table 85, when the parent pipe 41 is halted temporarily (processing in the parent pipe 41 is suspended) and the daughter pipe 41c is halted (processing in the daughter pipe 41c is canceled), a suspending command is transmitted to the front stage filter. Further, according to the condition management table 85, when both the parent pipe 41 and the daughter pipe 41c are halted (processing in the parent pipe 41 and the daughter pipe 41c is canceled), a canceling command is transmitted to the front stage filter.

In this way, in the pipe 41, by referring to the condition management table 85, the pipe manager 82 can determine the conditions of the pipe 41 and the daughter pipe 41c. Further, by combinations of the conditions of the pipe 41 and the daughter pipe 41c, the notification sent to the front stage filter of the pipe 41 can be determined.

Next, descriptions are made of items displayed on the operation panel 60 in the multi-output process in the image processing device 100 of the present embodiment.

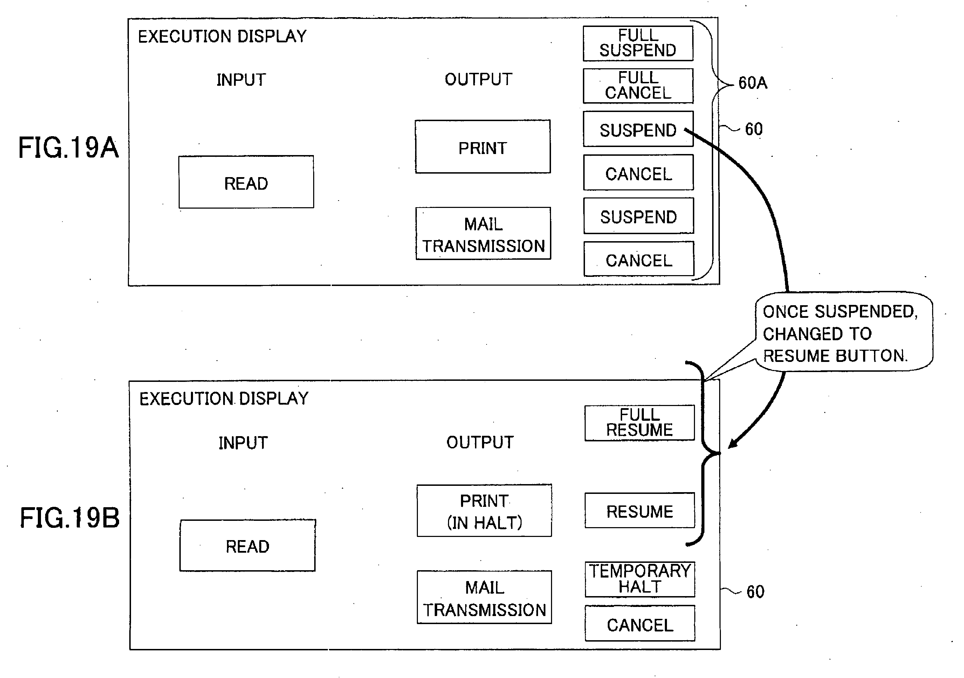

FIG. 19A and FIG. 19B are block diagrams illustrating items displayed on the operation panel 60 in the multi-output process in the image processing device 100 of the present embodiment.

For example, the operation panel 60 may be a touch panel displayed on a display device of the image processing device 100.

Specifically, FIG. 19A shows items displayed on the operation panel 60 in the multi-output process when the reading filter 301 is selected as the input filter, and the printing filter 321 and the mail transmission filter 323 are selected as the output filters.

On the operation panel 60, for example, near buttons of the selected output filters, operational buttons 60A are displayed, which are used for changing operations of the output filters at any timing. For example, the operational button 60A may be used to suspend or cancel operations in each of the selected output filters.

The user of the image processing device 100 operates the operational buttons 60A, which are displayed in the screen of each of the selected output filters, to suspend or cancel operations in any output filter and at any timing.

Further, on the operation panel 60, when the operational buttons 60A are operated to change operations of the output filters, the items displayed on the operation panel 60 may be changed accordingly.

FIG. 19B shows the operation panel 60 after operations of the output filters are changed.

For example, among the operational buttons 60A, when a suspending button indicating a suspending command is clicked or touched, on the operation panel 60, instead of displaying the suspending button near the suspended output filter, a resuming button may be displayed for issuing a resuming command. Concerning representation of the changed output filter, for example, color of the output filter may be changed, or the operation state after the change may be displayed near the button of the changed output filter.

With such an operation panel 60 in the image processing device 100 of the present embodiment, the user can change operations of filters as desired. Further, with such an operation panel 60, presentation of operation conditions of the filters can be changed according to the change of the operations of filters, the user can easily know the operations of filters.

### Second Embodiment

An image processing device 100A according to the second embodiment differs from the image processing device 100 of the first embodiment in that the parent pipe 41 generates plural daughter filters.

Below, only generation of the daughter filters in the parent pipe 41 is explained, and overlapping descriptions are omitted. In addition, in the present embodiment, the same reference numbers are assigned to the same elements as described previously.

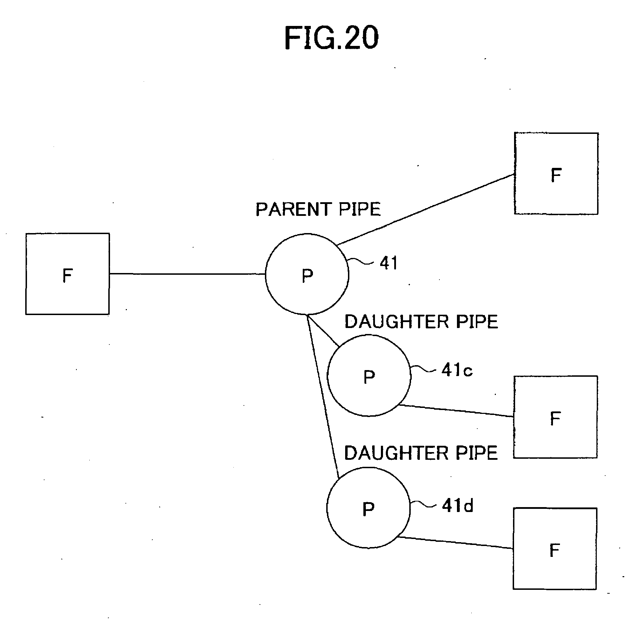

FIG. 20 is a diagram illustrating a process in which the parent pipe 41 generates plural daughter pipes.

In the multi-processing in the image processing device 100A of the present embodiment, when three or more output filters are selected, the control layer 20 directs the daughter pipe generator 81 of the parent pipe 41 to generate plural daughter pipes. The number of the generated daughter pipes equals the number of the selected output filters - 1. In FIG. 20, two daughter pipes 41c and 41d are illustrated.

In FIG. 20, three filters are selected, and the control layer 20 directs the daughter pipe generator 81 to generate two daughter pipes 41c and 41d. The couplings between pipes and the output filters are controlled by the control layer 20, the same as that in the first embodiment. Namely, the same as the first embodiment, in the present embodiment, one output filter is coupled to the subsequent stage of each pipe.

Therefore, in the present embodiment, each filter operates as a filter in a single output process.

In addition, since only the pipe 41 manages the real data output from the front stage filter, even when the number of the daughter pipes 41c increases, it is possible to prevent an increase of requirements for the capacity of the memory. Further, in the present embodiment, the parent pipe 41 controls states of the pipe 41 and all the daughter pipes 41c, 41d with the condition management table 85. Due to this, in the present embodiment, even though plural daughter pipes 41c are generated, control operations for starting, suspending, resuming, and canceling processing in output filters in the image processing device 100 are the same as those in the first embodiment. Hence, in the present embodiment, it is possible to maintain process-independence between pipes and filters, and between filters and filters, and it is possible to improve extendability in the filters.

Next, descriptions are made of the condition management table 85A in the present embodiment.

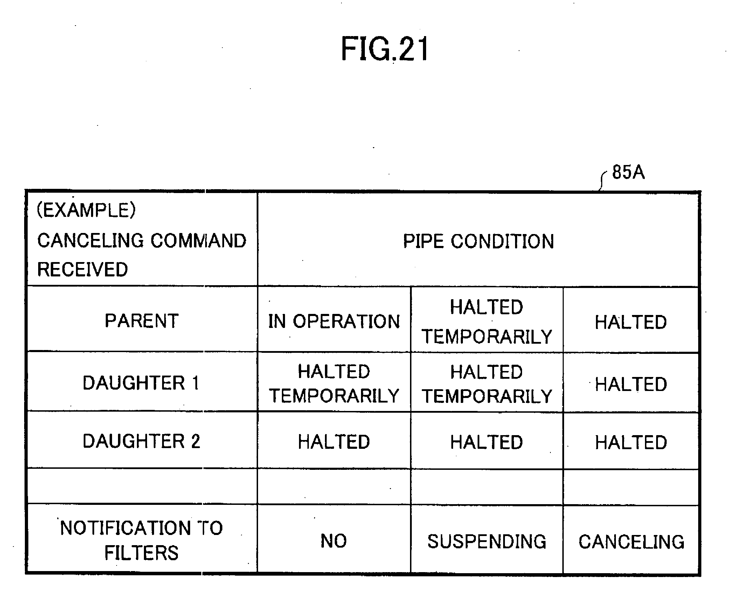

FIG. 21 is a table illustrating an example of a condition management table 85A in the present embodiment.

The condition management table 85A in FIG. 21 shows conditions of the parent pipe 41 and the daughter pipes 41c, 41d when the canceling commande is transmitted to the pipe 41, and notifications to filters based on combinations of the conditions of the pipes.

As described above, in the image processing device 100A of the present embodiment, the control operations for starting, suspending, resuming, and canceling processing in output filters are the same as those in the first embodiment. Thus, for example, when a canceling command is transmitted to the parent pipe 41, but the canceling command is not received by both the parent pipe 41 and all of the daughter pipes 41c, 41d, the pipe manager 82 does not send the canceling command to the front stage filter.

Due to this, in the image processing device 100A of the present embodiment, even when operations of a part of the output filters are suspended, operations of the remaining output filters can be continued.

In addition, for example, when the parent pipe 41 and the daughter pipe 41c are suspended, and the daughter pipe 41d is cancelled, the pipe 41 sends a suspending command to the front stage filter.

In doing so, in the image processing device 100A of the present embodiment, it is possible to resume processing in the daughter pipe 41c and the daughter pipe 41d.

### Third Embodiment

Next, descriptions are made of a recording medium for storing image processing programs able to realize functions described previously.

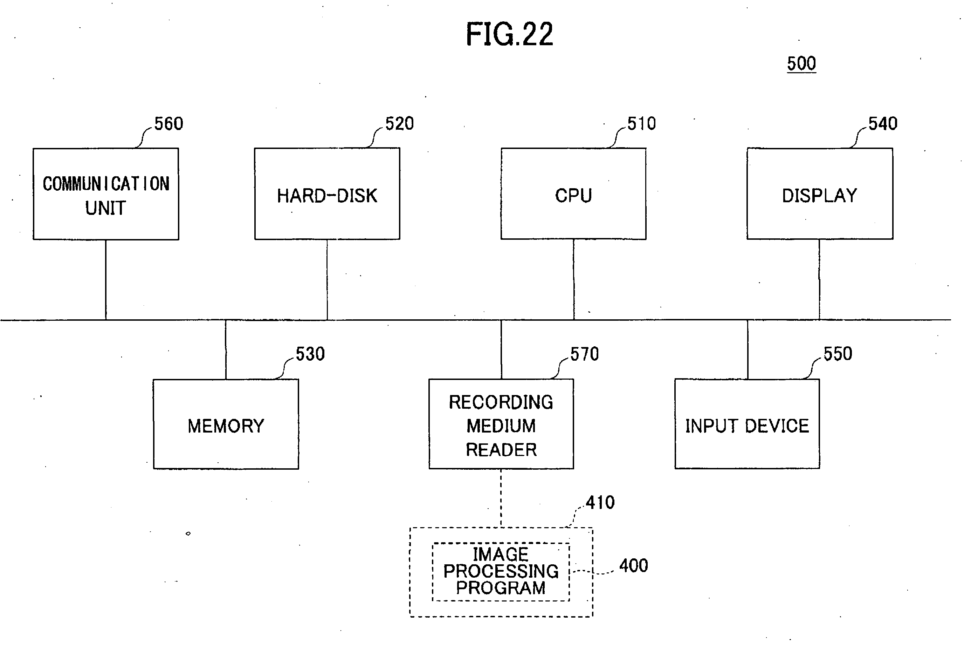

FIG. 22 is a block diagram illustrating an image processing device including a recording medium with image processing programs recorded therein for realizing image processing functions of the present invention.

As shown in FIG. 22, for example, a computer 500 includes a CPU 510, a hard-disk 520, a memory 530, a display device 540, an input device 550, a communication unit 560, and a recording medium reader 570.

Image processing programs 400 stored in a recording medium 410 are read into the computer 500, and are executed in the computer 500 to realize image processing functions of the present invention.

The CPU 510 is a calculation and processing unit to execute calculations and processing in the computer 500.

The hard-disk 520 is a storage unit for storing data; for example, applications running on the computer 500 and data produced by the applications are stored in the hard-disk 520.

The display device 540 displays data generated in the computer 500 for viewing by users.

For example, the communication unit 560 is a network control unit, and enables communications between the computer 500 and external devices.

The recording medium reader 570 reads data or applications stored in various kinds of recording media. For example, the recording medium reader 570 may be a floppy disk driver.

Image processing programs 400 are stored in the recording medium 410 for realizing image processing functions of the present invention. The image processing programs 400 are read into the computer 500 by the recording medium reader 570, and are executed by the CPU 510.

For example, the recording medium 410 is a floppy (registered trade mark) disk, or a CD-ROM (Compact Disc Read Only Memory), or any other recording media readable by the computer 500.

The image processing programs 400 may be downloaded with the communication unit 560 via a network, and stored in the hard-disk 520.

While the present invention is described with reference to specific embodiments chosen for purpose of illustration, it should be apparent that the invention is not limited to these embodiments, but numerous modifications could be made.

The invention is defined by the following claims.

## Claims

1. An image processing device (100), comprising:
one or more input filters (300 to 306) each of which is configured to control an input process for inputting image data for image processing, wherein the one or more input filters (300 to 306) includes one or more of a reading filter (301), a stored-document retrieving filter (302), a mail receiving filter (303), a facsimile receiving filter (304), a document receiving filter (305) and a report filter (306);
one or more output filters (320 to 326) each of which is configured to control an output process for outputting the image data to outside, wherein the one or more output filters (320 to 326) includes one or more of a printing filter (321), a stored-document registration filter (322), a mail transmission filter (323), a facsimile transmission filter (324), a document transmission filter (325) and a preview filter (326);
one or more processing filters (310 to 312) configured to process the image data between the input filters (300 to 306) and the output filters (320 to 326), wherein the one or more processing filters (310 to 312) includes one or more of a document processing filter (311) or a document conversion filter (312); and
an operational unit (20) configured to operate the image processing device (100) to execute processing,
wherein
the operational unit (20) is configured to allow a user to select one or more of the input filters (300 to 306) and one or more of the output filters (320 to 326), and
when one of the input filters (300 to 306) and two or more of the output filters (320 to 326) are selected, the output processes of the selected two or more output filters (320 to 326) are executed;
the image processing device (100) further comprising:
a primary pipe (41) configured to transmit data between the input filters (300 to 306), the output filters (320 to 326), and the processing filters (310 to 312); and
a control unit configured to control the primary pipe (41),
**characterized in that**:
the primary pipe (41) includes a subsidiary pipe generation unit (81) for generating a subsidiary pipe (41c), said subsidiary pipe (41c) being dependent on the primary pipe (41);
the control unit is configured to control the subsidiary pipe generation unit (81) to generate the subsidiary pipe (41c) when one of the input filters (300 to 306) and two or more of the output filters (320 to 326) are selected;
the primary pipe (41) and the generated subsidiary pipe (41c) are set in connection with the processing filters (310 to 312) and the output filters (320 to 326); and
a storage unit in which real data output from one of the input filters (300 to 306) and the processing filters (310 to 312) are stored,
wherein
the primary pipe (41) includes
a data manager (83) configured to manage the real data, and
a reference data storage unit (86) configured to store reference data indicating addresses for referring to the real data,
the subsidiary pipe (41 c) includes a reference data storage unit (91) configured to store the reference data indicating addresses for referring to the real data.

2. The image processing device (100) as claimed in claim 1, wherein the control unit is configured to couple one of the primary pipe (41) and the subsidiary pipe (41c) to one of an input side of the output filters (320 to 326) and the processing filters (310 to 312), and one of an output side of the input filters (300 to 306) and the processing filters (310 to 312).

3. The image processing device (100) as claimed in claim 1, wherein the primary pipe (41) includes an acquisition condition table (84) configured to store data indicating an acquisition condition of acquiring the real data in the primary pipe (41) and the subsidiary pipe (41c).

4. The image processing device (100) as claimed in claim 1, wherein
when the real data are output from one of the input filters (300 to 306) and the processing filters (310 to 312),
the control unit controls the data manager (83) to write the real data in the storage unit, and write the reference data in the reference data storage unit (86) of the primary pipe (41) and in the reference data storage unit (91) of the subsidiary pipe (41c).

5. The image processing device (100) as claimed in claim 1, wherein when one of the input filters (300 to 306) and the processing filters (310 to 312) reads the real data with reference to the reference data, the subsidiary pipe (41c) notifies the primary pipe (41) that the real data are read.

6. The image processing device (100) as claimed in claim 1, wherein when the real data are read by all of the subsidiary pipes (41c) and the primary pipes (41) in connection with the real data, the control unit controls the data manager (83) to delete said real data in the storage unit.

7. The image processing device (100) as claimed in claim 1, wherein the primary pipe (41) includes a pipe manager (82) configured to manage conditions of the primary pipe (41) and the subsidiary pipe (41c) according to processing results in the processing filters (310 to 312) or the output filters (320 to 326) at a subsequent stage of the primary pipe (41).

8. The image processing device (100) as claimed in claim 7, wherein the primary pipe (41) includes a condition management table (85) configured to store data indicating conditions of the primary pipe (41) and the subsidiary pipe (41 c).

9. The image processing device (100) as claimed in claim 8, wherein the pipe manager (82) is configured to start a data transmission process of data in the primary pipe (41) and the subsidiary pipe (41c) based on the data stored in the condition management table (85).

10. The image processing device (100) as claimed in claim 8, wherein the pipe manager (82) is configured to suspend a data transmission process of data in the primary pipe (41) and the subsidiary pipe (42) based on the data stored in the condition management table (85).

11. The image processing device (100) as claimed in claim 8, wherein the pipe manager (82) is configured to resume a data transmission process of data in the primary pipe (41) and the subsidiary pipe (41 c) based on the data stored in the condition management table (85).

12. The image processing device (100) as claimed in claim 8, wherein the pipe manager (82) is configured to cancel a data transmission process of data in the primary pipe (41) and the subsidiary pipe (41c) based on the data stored in the condition management table (85).

13. The image processing device (100) as claimed in claim 1, wherein the operational unit (20) is able to select one or more of the input filters (300 to 306), the output filters (320 to 326), and the processing filters (310 to 312) to start, suspend, resume, or cancel processing operations.

14. The image processing device (100) as claimed in claim 1, further comprising:
a display device configured to change displayed items according to operations of the operational unit (20).

15. An image processing method, comprising:
an input step of controlling an input process for inputting image data for image processing;
an output step of controlling an output process for outputting the image data to outside;
a processing step of processing the image data between an input filter (300 to 306) and an output filter (320 to 326); and
an operation step of operating an image processing device (100) to execute processing;
wherein
one or more of the input filters (300 to 306) and one or more of the output filters (320 to 326) are selected in the operation step, wherein the one or more input filters (300 to 306) includes one or more of a reading filter (301), a stored-document retrieving filter (302), a mail receiving filter (303), a facsimile receiving filter (304), a document receiving filter (305) and a report filter (306), and wherein the one or more output filters (320 to 326) includes one or more of a printing filter (321), a stored-document registration filter (322), a mail transmission filter (323), a facsimile transmission filter (324), a document transmission filter (325) and a preview filter (326), and
when one of the input filters (300 to 306) and two or more of the output filters (320 to 326) are selected, output processes of the selected two or more output filters (320 to 326) are executed;
the method further comprising:
a transmitting step of transmitting data between the input filters (300 to 306), the output filters (320 to 326) and the processing filters (310 to 312) by means of a primary pipe (41); and
a controlling step of controlling the primary pipe (41);
**characterized by**:
a generating step for generating a subsidiary pipe (41c) to be included in the primary pipe (41), said subsidiary pipe (41c) being dependent on the primary pipe (41);
the controlling step controls generation of the subsidiary pipe (41c) when one of the input filters (300 to 306) and two or more of the output filters (320 to 326) are selected;
a setting step of setting the primary pipe (41) and the generated subsidiary pipe (41c) in connection with the processing filters (310 to 312) and the output filters (320 to 326);
a storing step for storing real data output from one of the input filters (300 to 306) and the processing filters (310 to 312),
wherein
the real data are managed by a data manager (83) included in the primary pipe (41), and
reference data indicating addresses for reterring to the real data are stored in a reference data storage unit (86) included in the pimary pipe (41); and
a storing step for storing reference data indicating addresses for reterring to the real data in a reference data storage unit (91) included in the subsidiary pipe (41c).

16. A recording medium for storing an image processing program able to drive a computer to execute:
an input step of controlling an input process for inputting image data for image processing;
an output step of controlling an output process for outputting the image data to outside;
a processing step of processing the image data between an input filter (300 to 306) and an output filter (320 to 326); and
an operation step of operating an image processing device (100) to execute processing;
wherein
one or more of the input filters (300 to 306) and one or more of the output filters (320 to 326) are selected in the operation step, wherein the one or more input filters (300 to 306) includes one or more of a reading filter (301), a stored-document retrieving filter (302), a mail receiving filter (303), a facsimile receiving filter (304), a document receiving filter (305) and a report filter (306), and wherein the one or more output filters (320 to 326) includes one or more of a printing filter (321), a stored-document registration filter (322), a mail transmission filter (323), a facsimile transmission filter (324), a document transmission filter (325) and a preview filter (326), and
when one of the input filters (300 to 306) and two or more of the output filters (320 to 326) are selected, output processes of the selected two or more output filters (320 to 326) are executed;
a transmitting step of transmitting data between the input filters (300 to 306), the output filters (320 to 326) and the processing filters (310 to 312) by means of a primary pipe (41); and
a controlling step of controlling the primary pipe (41;,
**characterized by**:
a generating step for generating a subsidiary pipe (41c) to be included in the primary pipe (41), said subsidiary pipe (4 1 c) being dependent on the primary pipe (41);
the controlling step controls generation of the subsidiary pipe (41c) when one of the input filters (300 to 306) and two or more of the output filters (320 to 326) are selected;
a setting step of setting the primary pipe (41) and the generated subsidiary pipe (41c) in connection with the processing filters (310 to 312) and the output filters (320 to 326);
a storing step for storing real data output from one of the input filters (300 to 306) and the processing filters (310 to 312),
wherein
the real data are managed by a data manager (83) included in the primary pipe (41), and
reference data indicating addresses for referreing to the real data are stored in a reference data storage unit (86) included in the pimary pipe (41); and
a storing step for storing reference data indicating addresses for referreing to the real data in a reference data storage unit (91) included in the subsidiary pipe (41c).

## Patentansprüche

1. Bildverarbeitungsvorrichtung (100), die aufweist:
einen oder mehrere Eingabefilter (300 bis 206), wovon jeder konfiguriert ist, eine Eingabeverarbeitung für Eingabebilddaten für die Bildverarbeitung zu steuern, wobei der eine oder die mehreren Eingabefilter (300 bis 306) einen oder mehrere von einem Lesefilter (301), einem Wiedergewinnungsfilter (302) für gespeicherte Dokumente, einem Postempfangsfilter (303), einem Facsimileempfangsfilter (304), einem Dokumentempfangsfilter (305) und einem Berichtfilter (306) einschließt oder einschließen;
einen oder mehrere Ausgabefilter (320 bis 326), wovon jeder konfiguriert ist, eine Ausgabeverarbeitung zum Ausgeben der Bilddaten nach außen bzw. zu einer Außenseite zu steuern, wobei der eine oder die mehreren Ausgabefilter (320 bis 326) einen oder mehrere von einem Druckfilter (321), einem Registrationsfilter (322) für gespeicherte Dokumente, einem Postübertragungsfilter (323), einem Facsimileübertragungsfilter (324), einen Dokumentübertragungsfilter (325) und einem Previewfilter bzw. Voransichtsfilter (326) einschließt oder einschließen;
einen oder mehreren Verarbeitungsfilter (310 bis 312), der bzw. die konfiguriert ist bzw. sind, um die Bilddaten zwischen den Eingabefiltern (300 bis 306) und den Ausgabefiltern (320 bis 326) zu verarbeiten, wobei der eine oder die mehreren Verarbeitungsfilter (310 bis 312) einen oder mehrere von einem Dokumentverarbeitungsfilter (311) oder einem Dokumentkonversionsfilter (312) einschließt bzw. einschließen; und
eine Betriebseinheit (20), die konfiguriert ist, um die Bildverarbeitungsvornchtung (100) zu betreiben, um die Verarbeitung auszuführen,
wobei
die Betriebseinheit (20) konfiguriert ist, um einem Nutzer zu ermöglichen, einen oder mehrere der Eingabefilter (300 bis 306) und einen oder mehrere der Ausgabefilter (320 bis 326) zu wählen, und
wenn einer der Eingabefilter (300 bis 306) und zwei oder mehr der Ausgabefilter (320 bis 326) gewählt sind, wird die Ausgabeverarbeitung der gewählten zwei oder mehr Ausgabefilter (320 bis 326) ausgeführt;
die Bildverarbeitungsvorrichtung (100) weiter aufweist:
eine primäre Leitung bzw. Röhre oder Pipe (41), die konfiguriert ist, um Daten zwischen den Eingabefiltern (300 bis 306) zu übertragen, den Ausgabefiltern (320 bis 326) und den Verarbeitungsfilter (310 bis 312) zu übertragen; und
eine Steuereinheit die konfiguriert ist, die primäre Leitung bzw. Röhre oder Pipe (41) zu steuern,
**dadurch gekennzeichnet, dass**:
die primäre Leitung bzw. Röhre oder Pipe (41) eine Hilfsleitungserzeugungseinheit bzw. Nebenstellenleitungserzeugungseinheit oder Tochterleitungserzeugungseinheit (81) zur Erzeugung einer Hilfsleitung bzw. Nebenstellenleitung oder Tochterleitung (41c) einschließt, wobei die Hilfsleitung bzw. Nebenstellenleitung oder Tochterleitung (41c) abhängig von der primären Leitung bzw. Röhre oder Pipe (41) ist;
die Steuereinheit konfiguriert ist, um die Hilfsleitungserzeugungseinheit bzw. Nebenstellenerzeugungseinheit oder Tochterleitungserzeugungseinheit (81) zu steuern, um die Hilfsleitung bzw. Nebenstellenleitung oder Tochterleitung (41 c) zu erzeugen, wenn einer der Eingabefilter (300 bis 306) und zwei oder mehr der Ausgabefilter (320 bis 326) gewählt sind;
die primäre Leitung bzw. Röhre oder Pipe (41) und die erzeugte Hilfsleitung bzw. Nebenstellenleitung oder Tochterleitung (41c) in Verbindung mit den Verarbeitungsfiltern (310 bis 312) und den Ausgabefilter (320 bis 326) gesetzt sind; und
eine Speichereinheit, in welcher reale Daten, die von einem der Eingabefilter (300 bis 306) und den Verarbeitungsfiltern (310 bis 312) ausgegeben sind, gespeichert werden,
wobei
die primäre Leitung bzw. Röhre oder Pipe (41) einschließt,
einen Datenmanager (83) der konfiguriert ist, um die realen Daten zu managen bzw. zu handhaben, und
eine Bezugsdatenspeichereinheit (86), die konfiguriert ist, um die Bezugsdaten bzw. Referenzdaten, die Adressen andeuten bzw. angegeben, um sich auf die realen Daten zu beziehen, zu speichern,
die Hilfsleitung bzw. Nebenstellenleitung oder Tochterleitung (41c) einen Bezugsdatenspeichereinheit (91) einschließt, die konfiguriert ist, um Bezugsdaten bzw. Referenzdaten, die Adressen andeuten bzw. angeben, um sich auf die realen Daten zu beziehen, zu speichern.

2. Bildverarbeitungsvorrichtung (100) nach Anspruch 1, wobei die Steuereinheit konfiguriert ist, um eine der primären Leitung bzw. Röhre oder Pipe (41) und der Hilfsleitung bzw. Nebenstellenleitung oder Tochterleitung (41 c) zu einem von einer Eingabeseite der Ausgabefilter (320 bis 326) und der Verarbeitungsfilter (310 bis 312) zu koppeln, und einen von einer Ausgabeseite der Eingabefilter (300 bis 306) und der Verarbeitungsfilter (310 bis 312) zu koppeln.

3. Bildverarbeitungsvorrichtung (100) nach Anspruch 1, wobei die primäre Leitung bzw. Röhre oder Pipe (41) eine Erfassungsbedingungstabelle (84) einschließt, die konfiguriert ist, um Daten zu speichern, die eine Erfassungsbedingung zur Erfassung der realen Daten in der primären Leitung bzw. Röhre oder Pipe (41) und der Hilfsleitung bzw. Nebenstellenleitung oder Tochterleitung (41c) andeutet bzw. angibt, zu speichern.

4. Bildverarbeitungsvorrichtung (100) nach Anspruch 1, wobei
wenn die realen Daten von einem der Eingabefilter (300 bis 306) und der Verarbeitungsfilter (310 bis 132) ausgegeben werden,
steuert die Steuereinheit den Datenmanager (83), um die realen Daten in die Speichereinheit zu schreiben, und schreibt die Bezugsdaten in die Bezugsdatenspeichereinheit (86) der primären Leitung bzw. Röhre oder Pipe (41) und in die Bezugsdatenspeichereinheit (91) der Hilfsleitung bzw. Nebenstellenleitung oder Tochterleitung (41 c).

5. Bildverarbeitungsvorrichtung (100) nach Anspruch 1, wobei, wenn einer der Eingabefilter (300 bis 306) und der Verarbeitungsfilter (310 bis 312) die realen Daten mit Bezug auf die Bezugsdaten bzw. Referenzdaten liest, unterrichtet die Hilfsleitung bzw. Nebenstellenleitung oder Tochterleitung die primäre Leitung bzw. Röhre oder Pipe (41), dass die realen Daten gelesen werden.

6. Bildverarbeitungsvorrichtung (100) nach Anspruch 1, wobei wenn die realen Daten durch alle Hilfsleitungen bzw. Nebenleitungen oder Tochterleitungen (41c) und den primären Leitungen bzw. Röhren oder Pipes (41) in Verbindung mit den realen Daten gelesen wurden, steuert die Steuereinheit den Datenmanager (83) um die realen Daten in der Speichereinheit zu löschen.

7. Bildverarbeitungsvorrichtung (100) nach Anspruch 1, wobei die primäre Leitung bzw. Röhre oder Pipe (41) einen Leitungsmanager bzw. Röhrenmanager oder Pipemanager (82) einschließt, der konfiguriert ist, um die Bedingungen der primären Leitung bzw. Röhre oder Pipe (41) und der Hilfsleitung bzw. Nebenstellenleitung oder Tochterleitung (41) zu managen bzw. zu handhaben, und zwar entsprechend den Verarbeitungsergebnissen in den Verarbeitungsfiltern (310 bis 312) oder den Ausgabefiltern (320 bis 326), und zwar an einer nachfolgenden Stufe der primären Leitung bzw. Röhre oder Pipe (41).

8. Bildverarbeitungsvorrichtung (100) nach Anspruch 7, wobei die primäre Leitung bzw. Röhre oder Pipe (41) eine Bedingungsmanagementtabelle (85) einschließt, die konfiguriert ist, um Daten zu speichern, die Bedingungen der primären Leitung bzw. Röhre oder Pipe (41) und der Hilfsleitung bzw. Nebenstellenleitung oder Tochterleitung (41 c) andeuten bzw. angeben.

9. Bildverarbeitungsvorrichtung (100) nach Anspruch 8, wobei der Leitungsmanager bzw. Röhrenmanager oder Pipemanager (82) konfiguriert ist, um einen Datenübertragungsprozess von Daten in die primäre Leitung bzw. Röhre oder Pipe (41) und die Hilfsleitung bzw. Nebenstellenleitung oder Tochterleitung (41c) zu beginnen, und zwar basierend auf den Daten, die in der Bedingungsmanagementtabelle (85) gespeichert sind.

10. Bildverarbeitungsvorrichtung (100) nach Anspruch 8, wobei der Leitungmanager bzw. Röhrenmanager oder Pipemanager (82) konfiguriert ist, um den Datenübertragungsprozess von Daten in die primäre Leitung bzw. Röhre oder Pipe (41) und die Hilfsleitung bzw. Nebenstellenleitung oder Tochterleitung (42) aufzuschieben, und zwar basierend auf den Daten, die in der Bedingungsmanagementtabelle (85) gespeichert sind.

11. Bildverarbeitungsvornchtung (100) nach Anspruch 8, wobei der Leitungsmanager bzw. Röhrenmanager oder Pipemanager (82) konfiguriert ist, um einen Datenübertragungsprozess von Daten in die primäre Leitung bzw. Röhre oder Pipe (41) und die Hilfsleitung bzw. Nebenstellenleitung oder Tochterleitung (41 c) basierend auf den Daten, die in der Bedingungsmanagementtabelle (85) gespeichert sind, wieder aufzunehmen.

12. Bildverarbeitungsvorrichtung (100) nach Anspruch 8, wobei der Leitungsmanager bzw. Röhrenmanager oder Pipemanager (82) konfiguriert ist, um einen Datenübertragungsprozess von Daten in die primäre Leitung bzw. Röhre oder Pipe (41) und die Hilfsleitung bzw. Nebenstellenleitung oder Tochterleitung (41c) basierend auf den Daten, die in der Bedingungsmanagementtabelle (85) gespeichert sind, zu löschen bzw. zu entfernen.

13. Bildverarbeitungsvorrichtung (100) nach Anspruch 1, wobei die Betriebseinheit (20) geeignet bzw. befähigt ist, ein oder mehrere der Eingabefilter (300 bis 306), die Ausgabefilter (320 bis 326) und der Verarbeitungsfilter (310 bis 312) auszuwählen, um Verarbeitungsoperationen zu beginnen, aufzuschieben, wieder aufzunehmen oder zu löschen bzw. zu entfernen.

14. Bildverarbeitungsvorrichtung (100) nach Anspruch 1, weiter aufweisend:
eine Anzeigevorrichtung, die konfiguriert ist, um angezeigte Gegenstände bzw. Eintragungen entsprechend den Operationen der Betriebseinheit (20) zu ändern.

15. Bildverarbeitungsverfahren, aufweisend:
einen Eingabeschritt des Steuerns eines Eingabeprozesses zur Eingabe von Bilddaten für eine Bildverarbeitung;
einen Ausgabeschritt des Steuerns eines Ausgabeprozesses zur Ausgabe der Bilddaten zu einer Außenseite bzw. nach außen;
einen Verarbeitungsschritt des Verarbeitens der Bilddaten zwischen einem Eingabefilter (300 bis 306) und einem Ausgabefilter (320 bis 326); und
einen Betriebsschritt des Betreibens einer Bildverarbeitungsvorrichtung (100), um eine Verarbeitung auszuführen;
wobei
einer oder mehrere der Eingabefilter (300 bis 306) und eine oder mehrere der Ausgabefilter (320 bis 326) in dem Betriebsschritt gewählt werden, wobei der eine oder die mehreren Eingabefilter (300 bis 306) einen oder mehrere an einem Lesefilter (301), einem Wiedergewinnungsfilter (302) für gespeicherte Dokumente, einem Postempfangsfilter (303), einem Facsimileempfangsfilter (304), einem Dokumentempfangsfilter (305) und einem Berichtfilter (306) einschließt oder einschließen; und wobei der einen oder die mehreren Ausgabefilter (320 bis 326) einen oder mehrere von einem Druckfilter (321), einem Registrationsfilter (322) für gespeicherte Dokumente, einem Postübertragungsfilter (323), einem Faksimileübertragungsfilter (324), einem Dokumentübertragungsfilter (325) und einem Previewfilter bzw. Voransichtsfilter (326) einschließt bzw. einschließen, und
wenn einer der Eingabefilter (300 bis 306) und zwei oder mehrere der Ausgabefilter (320 bis 326) gewählt werden, werden Ausgabeprozesse der gewählten zwei oder mehreren Ausgabefilter (320 bis 326) ausgeführt,
das Verfahren weiter aufweist:
einen Übertragungsschritt des Übertragens von Daten zwischen den Eingabefiltern (300 bis 306), den Ausgabefiltern (320 bis 326) und den Verarbeitungsfiltern (310 bis 312), und zwar mittels einer primären Leitung bzw. Röhre oder Pipe (41); und
einen Steuerschritt des Steuerns der primären Leitung bzw. Röhre oder Pipe (41),
**gekennzeichnet durch**:
einen Erzeugungsschritt zum Erzeugen einer Hilfsleitung bzw. Nebenstellenleitung oder Tochterleitung (41c), die in der primären Leitung bzw. Röhre oder Pipe (41) eingeschlossen ist, wobei die Hilfsleitung bzw. Nebenstellenleitung oder Tochterleitung (41c) abhängig von der primären Leitung bzw. Röhre oder Pipe (41) ist;
der Steuerschritt die Erzeugung der Hilfsleitung bzw. Nebenstellenleitung oder Tochterleitung (41c) steuert, wenn einer der Eingabefilter (300 bis 306) und zwei oder mehrere der Ausgabefilter (320 bis 326) gewählt sind;
einen Einstellschritt des Einstellens der primären Leitung bzw. Röhre oder Pipe (41) und der erzeugten Hilfsleitung bzw. Nebenstellenleitung oder Tochterleitung (41 c) in Verbindung mit den Verarbeitungsfiltern (310 bis 312) und den Ausgabefiltern (320 bis 326);
einen Speicherschritt zum Speichern von realen Daten, die von einem der Eingabefilter (300 bis 306) und der Verarbeitungsfilter (310 bis 312) ausgegeben wurden,
wobei
die realen Daten **durch** den Datenmanager (83) gemanagt bzw. gehandhabt werden, der in der primären Leitung bzw. Röhre oder Pipe (41) eingeschlossen ist, und
Bezugsdaten, die Adressen andeuten bzw. angeben, um Bezug auf die realen Daten zu nehmen, werden in einer Bezugsdatenspeichereinheit (86) gespeichert, die in der primären Leitung bzw. Röhre oder Pipe (41) eingeschlossen ist; und
einen Speicherschritt des Speicherns von Bezugsdaten, die Adressen andeuten bzw. angeben, um Bezug auf die realen Daten zu nehmen, und zwar in eine Bezugsdatenspeichereinheit (91), die in der Hilfsleitung bzw. Nebenstellenleitung oder Tochterleitung (44c) eingeschlossen ist.

16. Aufzeichnungsmedium zum Speichern eines Bildverarbeitungsprogramms, das geeignet bzw. befähigt fähig ist, einen Computer anzutreiben, um auszuführen:
einen Eingabeschritt des Steuerns eines Eingabeprozesses zur Eingabe von Bilddaten für eine Bildverarbeitung;
einen Ausgabeschritt des Steuerns eines Ausgabeprozesses zur Ausgabe von Bilddaten zu einer Außenseite bzw. nach außen;
einen Verarbeitungsschritt des Verarbeiten der Bilddaten zwischen einem Eingabefilter (300 bis 306) und einem Ausgabefilter (320 bis 326); und
einen Betriebsschritt des Betreibens einer Bildverarbeitungsvorrichtung (100) um eine Verarbeitung auszuführen;
wobei
einer oder mehrere der Eingabefilter (300 bis 306) und einer oder mehrere der Ausgabefilter (320 bis 326) in dem Betriebsschritt gewählt werden, wobei der eine oder die mehreren Eingabefilter (300 bis 306) eine oder mehrere von einem Lesefilter (301), einem Wiedergewinnungsfilter (302) für gespeicherte Dokumente, einem Postempfangsfilter (303), einem Facsimileempfangsfilter (304), einem Dokumentempfangsfilter (305) und einem Berichtfilter (306) einschließt bzw. einschließen, und wobei der eine oder die mehreren Ausgabefilter (320 bis 326), eine oder mehrere von einem Druckfilter (321), einem Registrationsfilter (322) für gespeicherte Dokumente, einem Postübertragungsfilter (323), einem Facsimileübertragungsfilter (324), einem Dokumentübertragungsfilter (325) und einem Voransichtsfilter bzw. Previewfilter (326) einschließt oder einschließen, und
wenn einer der Eingabefilter (300 bis 306) und zwei oder mehr der Ausgabefilter (320 bis 326) gewählt werden, werden Ausgabeprozesse der gewählten zwei oder mehrere Ausgabefilter (320 bis 326) ausgeführt;
einen Übertragungsschritt des Übertragens von Daten zwischen den Eingabefiltern (300 bis 306), den Ausgabefiltern (320 bis 326) und den Verarbeitungsfiltern (310 bis 312), und zwar mittels einer primären Leitung bzw. Röhre oder Pipe (41); und
einen Steuerschritt des Steuerns der primären Leitung bzw. Röhre oder Pipe (41), **gekennzeichnet durch**:
einen Erzeugungsschritt, um eine Hilfsleitung bzw. Nebenstellenleitung oder Tochterleitung (41 c) zu erzeugen, die in der primären Leitung bzw. Röhre oder Pipe (41) einzuschließen ist, wobei die Hilfsleitung bzw. Nebenstellenleitung oder Tochterleitung (41c) abhängig von der primären Leitung bzw. Röhre oder Pipe (41) ist;
der Steuerschritt die Erzeugung der Hilfsleitung bzw. Nebenstellenleitung oder Tochterleitung (41c) steuert, wenn einer der Eingabefilter (300 bis 306) und zwei oder mehr der Ausgabefilter (320 bis 326) gewählt sind;
einen Einstellschritt des Einstellens der primären Leitung bzw. Röhre oder Pipe (41) und der erzeugten Hilfsleitung bzw. Nebenstellenleitung oder Tochterleitung (41 c), und zwar in Verbindung mit der Verarbeitungsfiltern (310 bis 312) und der Ausgabefilter (320 bis 326);
einen Speicherschritt des Speicherns von realen Daten, die von einem der Eingabefilter (300 bis 306) und den Verarbeitungsfiltern (310 bis 312) ausgegeben wurden,
wobei
die realen Daten **durch** einen Datenmanager (83) gemanagt bzw. gehandhabt werden, der in der primären Leitung bzw. Röhre oder Pipe (41) eingeschlossen ist, und
Bezugsdaten, die Adressen andeuten bzw. angeben, um auf die realen Daten Bezug zu nehmen, sind in einer Bezugsdatenspeichereinheit (86) gespeichert, die in der primären Leitung bzw. Röhre oder Pipe (41) gespeichert sind; und
einen Speicherschritt des Speicherns von Bezugsdaten, die Adressen andeuten, bzw. angeben, um auf die realen Daten Bezug zu nehmen, und zwar in einer Bezugsdatenspeichereinheit (91), die in der Hilfsleitung bzw. Nebenstellenleitung oder Tochterleitung (41c) einschlossen ist.

## Revendications

1. Dispositif de traitement d'image (100) comprenant :
un ou plusieurs filtres d'entrée (300 à 306), chacun d'entre eux étant configuré pour commander un processus d'entrée pour entrer des données d'image pour un traitement d'image, dans lequel le ou les filtres d'entrée (300 à 306) comportent un ou plusieurs filtres parmi un filtre de lecture (301) un filtre de récupération de document mémorisé (302), un filtre de réception de courrier (303), un filtre de réception de télécopie (304), un filtre de réception de document (305) et un filtre de rapport (306) ;
un ou plusieurs filtres de sortie (320 à 326), chacun d'entre eux étant configuré pour commander un processus de sortie pour fournir en sortie les données d'image vers l'extérieur, dans lequel le ou les filtres de sortie (320 à 326) comportent un ou plusieurs filtres parmi un filtre d'impression (321), un filtre d'enregistrement de document mémorisé (322), un filtre de transmission de courrier (323), un filtre de transmission de télécopie (324), un filtre de transmission de document (325) et un filtre de prévisualisation (326) ;
un ou plusieurs filtres de traitement (310 à 312) configurés pour traiter les données d'image entre les filtres d'entrée (300 à 306) et les filtres de sortie (320 à 326), dans lequel le ou les filtres de traitement (310 à 312) comportent un ou plusieurs filtres parmi un filtre de traitement de document (311) et un filtre de conversion de document (312) ; et
une unité fonctionnelle (20) configurée pour faire fonctionner le dispositif de traitement d'image (100) pour exécuter un traitement,
dans lequel
l'unité fonctionnelle (20) est configurée pour permettre à un utilisateur de sélectionner un ou plusieurs filtres des filtres d'entrée (300 à 306) et un ou plusieurs filtres des filtres de sortie (320 à 326), et
lorsque l'un des filtres d'entrée (300 à 306) et deux filtres ou plus des filtres de sortie (320 à 326) sont sélectionnés, les processus de sortie des deux filtres ou plus des filtres sélectionnés parmi les filtres de sortie (320 à 326) sont exécutés ;
le dispositif de traitement d'image (100) comprenant en outre :
un tuyau principal (41) configuré pour transmettre des données entre les filtres d'entrée (300 à 306), les filtres de sortie (320 à 326) et les filtres de traitement (310 à 312) ; et
une unité de commande configurée pour commander le tuyau principal (41),
**caractérisé en ce que** :
le tuyau principal (41) comporte une unité de génération de tuyau auxiliaire (81) pour générer un tuyau auxiliaire (41c), ledit tuyau auxiliaire (41c) dépendant du tuyau principal (41) ;
l'unité de commande est configurée pour commander l'unité de génération de tuyau auxiliaire (81) pour générer le tuyau auxiliaire (41c) lorsque l'un des filtres d'entrée (300 à 306) et deux filtres ou plus des filtres de sortie (320 à 326) sont sélectionnés ;
le tuyau principal (41) et le tuyau auxiliaire généré (41c) sont mis en liaison avec les filtres de traitement (310 à 312) et les filtres de sortie (320 à 326) ; et
une unité de mémorisation dans laquelle sont mémorisées des données réelles fournies en sortie par un filtre des filtres d'entrée (300 à 306) et des filtres de traitement (310 à 312),
dans lequel
le tuyau principal (41) comporte
un gestionnaire de données (83) configuré pour gérer les données réelles, et
une unité de mémorisation de données de référence (86) configurée pour mémoriser des données de référence indiquant des adresses pour se référer aux données réelles,
le tuyau auxiliaire (41c) comporte une unité de mémorisation de données de référence (91) configurée pour mémoriser les données de référence indiquant des adresses pour se référer aux données réelles.

2. Dispositif de traitement d'image (100) selon la revendication 1, dans lequel l'unité de commande est configurée pour coupler un tuyau parmi le tuyau principal (41) et le tuyau auxiliaire (41c) à un côté parmi le côté d'entrée des filtres de sortie (320 à 326) et des filtres de traitement (310 à 312) et à un côté parmi le côté de sortie des filtres d'entrée (300 à 306) et des filtres de traitement (310 à 312).

3. Dispositif de traitement d'image (100) selon la revendication 1, dans lequel le tuyau principal (41) comporte une table d'états d'acquisition (84) configurée pour mémoriser des données indiquant l'état d'acquisition des données réelles dans le tuyau principal (41) et le tuyau auxiliaire (41c).

4. Dispositif de traitement d'image (100) selon la revendication 1, dans lequel
lorsque les données réelles sont fournies en sortie par un filtre des filtres d'entrée (300 à 306) et des filtres de traitement (310 à 312),
l'unité de commande commande le gestionnaire de données (83) pour écrire les données réelles dans l'unité de mémorisation, et écrire les données de référence dans l'unité de mémorisation de données de référence (86) du tuyau principal (41) et dans l'unité de mémorisation de données de référence (91) du tuyau auxiliaire (41c).

5. Dispositif de traitement d'image (100) selon la revendication 1, dans lequel, lorsqu'un filtre des filtres d'entrée (300 à 306) et des filtres de traitement (310 à 312) lit des données réelles en référence aux données de référence, le tuyau auxiliaire (41c) avertit le tuyau principal (41) que les données réelles sont lues.

6. Dispositif de traitement d'image (100) selon la revendication 1, dans lequel, lorsque les données réelles sont lues par l'ensemble des tuyaux auxiliaires (41c) et des tuyaux principaux (41), en liaison avec les données réelles, l'unité de commande commande le gestionnaire de données (83) pour effacer lesdites données réelles de l'unité de mémorisation.

7. Dispositif de traitement d'image (100) selon la revendication 1, dans lequel le tuyau principal (41) comporte un gestionnaire de tuyau (82) configuré pour gérer les états du tuyau principal (41) et du tuyau auxiliaire (41c) conformément au traitement de résultats dans les filtres de traitement (310 à 312) ou les filtres de sortie (320 à 326) à une étape suivante du tuyau principal (41).

8. Dispositif de traitement d'image (100) selon la revendication 7, dans lequel le tuyau principal (41) comporte une table de gestion d'états (85) configurée pour mémoriser des données indiquant les états du tuyau principal (41) et du tuyau auxiliaire (41c).

9. Dispositif de traitement d'image (100) selon la revendication 8, dans lequel le gestionnaire de tuyau (82) est configuré pour démarrer un processus de transmission de données des données situées dans le tuyau principal (41) et le tuyau auxiliaire (41c) en se basant sur les données mémorisées dans la table de gestion d'états (85).

10. Dispositif de traitement d'image (100) selon la revendication 8, dans lequel le gestionnaire de tuyau (82) est configuré pour interrompre un processus de transmission de données des données situées dans le tuyau principal (41) et le tuyau secondaire (42) en se basant sur les données mémorisées dans la table de gestion d'états (85).

11. Dispositif de traitement d'image (100) selon la revendication 8, dans lequel le gestionnaire de tuyau (82) est configuré pour reprendre un processus de transmission de données des données situées dans le tuyau principal (41) et le tuyau auxiliaire (41c) en se basant sur les données mémorisées dans la table de gestion d'états (85).

12. Dispositif de traitement d'image (100) selon la revendication 8, dans lequel le gestionnaire de tuyau (82) est configuré pour annuler un processus de transmission de données des données situées dans le tuyau principal (41) et le tuyau auxiliaire (41c) en se basant sur les données mémorisées dans la table de gestion d'états (85).

13. Dispositif de traitement d'image (100) selon la revendication 1, dans lequel l'unité fonctionnelle (20) est capable de sélectionner un ou plusieurs filtres des filtres d'entrée (300 à 306), des filtres de sortie (320 à 326) et des filtres de traitement (310 à 302) pour démarrer, interrompre, reprendre ou annuler des opérations de traitement.

14. Dispositif de traitement d'image (100) selon la revendication 1, comprenant en outre :
un dispositif d'affichage configuré pour modifier des éléments affichés conformément aux actions de l'unité fonctionnelle (20).

15. Procédé de traitement d'image comprenant :
une étape d'entrée pour commander un processus d'entrée pour entrer des données d'image pour un traitement d'image ;
une étape de sortie pour commander un processus de sortie pour fournir en sortie les données d'image vers l'extérieur ;
une étape de traitement pour traiter les données d'image entre un filtre d'entrée (300 à 306) et un filtre de sortie (320 à 326) ; et
une étape fonctionnelle pour faire fonctionner un dispositif de traitement d'image (100) pour exécuter un traitement,
dans lequel
un ou plusieurs des filtres d'entrée (300 à 306) et un ou plusieurs des filtres de sortie (320 à 326) sont sélectionnés à l'étape fonctionnelle, dans lequel le ou les filtres d'entrée (300 à 306) comportent un ou plusieurs filtres parmi un filtre de lecture (301) un filtre de récupération de document mémorisé (302), un filtre de réception de courrier (303), un filtre de réception de télécopie (304), un filtre de réception de document (305) et un filtre de rapport (306), et dans lequel le ou les filtres de sortie (320 à 326) comportent un ou plusieurs filtres parmi un filtre d'impression (321), un filtre d'enregistrement de document mémorisé (322), un filtre de transmission de courrier (323), un filtre de transmission de télécopie (324), un filtre de transmission de document (325) et un filtre de prévisualisation (326), et
lorsque l'un des filtres d'entrée (300 à 306) et deux filtres ou plus des filtres de sortie (320 à 326) sont sélectionnés, les processus de sortie des deux filtres ou plus des filtres sélectionnés parmi les filtres de sortie (320 à 326) sont exécutés ;
le procédé comprenant en outre :
une étape de transmission pour transmettre des données entre les filtres d'entrée (300 à 306), les filtres de sortie (320 à 326) et les filtres de traitement (310 à 312), au moyen d'un tuyau principal (41) ; et
une étape de commande pour commander le tuyau principal (41) ; '
**caractérisé par** :
une étape de génération pour générer un tuyau auxiliaire (41c) destiné à être inclus dans le tuyau principal (41), ledit tuyau auxiliaire (41c) dépendant du tuyau principal (41) ;
l'étape de commande commande la génération du tuyau auxiliaire (41c) lorsque l'un des filtres d'entrée (300 à 306) et deux filtres ou plus des filtres de sortie (320 à 326) sont sélectionnés ;
une étape de liaison pour mettre en liaison le tuyau principal (41) et le tuyau auxiliaire généré (41c) avec les filtres de traitement (310 à 312) et les filtres de sortie (320 à 326) ;
une étape de mémorisation pour mémoriser des données réelles fournies en sortie par un filtre des filtres d'entrée (300 à 306) et des filtres de traitement (310 à 312),
dans lequel
les données réelles sont gérées par un gestionnaire de données (83) inclus dans le tuyau principal (41), et
des données de référence indiquant des adresses pour se référer aux données réelles sont mémorisées dans une unité de mémorisation de données de référence (86) incluse dans le tuyau principal (41) ; et
une étape de mémorisation pour mémoriser les données de référence indiquant des adresses pour se référer aux données réelles dans une unité de mémorisation de données de référence (91) incluse dans le tuyau auxiliaire (41c).

16. Support d'enregistrement pour mémoriser un programme de traitement d'image capable de commander un ordinateur pour exécuter :
une étape d'entrée pour commander un processus d'entrée pour entrer des données d'image pour un traitement d'image ;
une étape de sortie pour commander un processus de sortie pour fournir en sortie les données d'image vers l'extérieur ;
une étape de traitement pour traiter les données d'image entre un filtre d'entrée (300 à 306) et un filtre de sortie (320 à 326) ; et
une étape fonctionnelle pour faire fonctionner un dispositif de traitement d'image (100) pour exécuter un traitement,
dans lequel
un ou plusieurs filtres des filtres d'entrée (300 à 306) et un ou plusieurs filtres des filtres de sortie (320 à 326) sont sélectionnés à l'étape fonctionnelle, dans lequel le ou les filtres d'entrée (300 à 306) comportent un ou plusieurs filtres parmi un filtre de lecture (301) un filtre de récupération de document mémorisé (302), un filtre de réception de courrier (303), un filtre de réception de télécopie (304), un filtre de réception de document (305) et un filtre de rapport (306), et dans lequel le ou les filtres de sortie (320 à 326) comportent un ou plusieurs filtres parmi un filtre d'impression (321), un filtre d'enregistrement de document mémorisé (322), un filtre de transmission de courrier (323), un filtre de transmission de télécopie (324), un filtre de transmission de document (325) et un filtre de prévisualisation (326), et
lorsque l'un des filtres d'entrée (300 à 306) et deux filtres ou plus des filtres de sortie (320 à 326) sont sélectionnés, les processus de sortie des deux filtres ou plus des filtres sélectionnés parmi les filtres de sortie (320 à 326) sont exécutés ;
le procédé comprenant en outre :
une étape de transmission pour transmettre des données entre les filtres d'entrée (300 à 306), les filtres de sortie (320 à 326) et les filtres de traitement (310 à 312), au moyen d'un tuyau principal (41) ; et
une étape de commande pour commander le tuyau principal (41) ;
**caractérisé par** :
une étape de génération pour générer un tuyau auxiliaire (41c) destiné à être inclus dans le tuyau principal (41), ledit tuyau auxiliaire (41c) dépendant du tuyau principal (41) ;
l'étape de commande commande la génération du tuyau auxiliaire (41c) lorsque l'un des filtres d'entrée (300 à 306) et deux filtres ou plus des filtres de sortie (320 à 326) sont sélectionnés ;
une étape de liaison pour mettre en liaison le tuyau principal (41) et le tuyau auxiliaire généré (41c) avec les filtres de traitement (310 à 312) et les filtres de sortie (320 à 326) ;
une étape de mémorisation pour mémoriser des données réelles fournies en sortie par un filtre des filtres d'entrée (300 à 306) et des filtres de traitement (310 à 312),
dans lequel
les données réelles sont gérées par un gestionnaire de données (83) inclus dans le tuyau principal (41), et
des données de référence indiquant des adresses pour se référer aux données réelles sont mémorisées dans une unité de mémorisation de données de référence (86) incluse dans le tuyau principal (41) ; et
une étape de mémorisation pour mémoriser les données de référence indiquant des adresses pour se référer aux données réelles dans une unité de mémorisation de données de référence (91) incluse dans le tuyau auxiliaire (41c).
